# EUROPEAN PATENT SPECIFICATION

(11) **EP 0 802 865 B1**
(45) Date of publication and mention of the grant of the patent: **12.12.2001**
(21) Application number: 95928889.5
(22) Date of filing: 18.08.1995
(51) Int. Cl.: B60C 7/10, B60C 7/08, B62D 55/26, B62D 55/24

(54) **NON-PNEUMATIC TYRE**
VOLLREIFEN
BANDAGE PLEIN

(30) Priority: 19.08.1994 AU PM757394; 09.01.1995 AU PN047095; 25.01.1995 AU PN073595; 25.01.1995 AU PN073695; 24.02.1995 AU PN137395; 16.03.1995 AU PN179195
(43) Date of publication of application: 29.10.1997
(73) Proprietor: Airboss Tyres Pty. Ltd., Kewdale, W.A. 6105 (AU)
(72) Inventor: HAYDON, Gregory, Richard, Sorrento, W.A. 6020 (AU); HARWOOD, Stephen, Wembley, W.A. 6014 (AU)
(74) Representative: Pacitti, Pierpaolo A.M.E.
(86) International application number: AU9500514
(87) International publication number: WO9605917

(56) References cited:
- EP-A- 0 502 353
- WO-A-95/03183
- WO-A-95/05947
- AU-A- 6 495 090
- DE-A- 3 134 963
- DE-C- 194 492
- FR-A- 581 827
- FR-A- 2 006 313
- FR-A- 2 339 504
- GB-A- 242 459
- US-A- 1 365 539
- US-A- 1 402 947
- US-A- 1 462 760
- US-A- 4 945 962
- DERWENT ABSTRACT, Accession No. 94-206002/25, Class Q11; & JP,A,06 143 911 (OHTSU TIRE & RUBBER CO LTD), 24 May 1994.
- DERWENT ABSTRACT, Accession No. 95-009390/02, Class Q11; & JP,A,06 293 203 (BRIDGESTONE CORP), 21 October 1994.

## Description

### Technical Field

This invention relates to a tyre which is of non-pneumatic character.

### Background of the Invention

There have been various proposals for non-pneumatic tyres for vehicles, including one-piece tyres and composite tyres assembled from a plurality of tyre segments. Examples of such tyres are disclosed in DE 194,492 (Yberty et al) US 1,462,760 (Krusemark), US 1365539 (Pepple), US 1414252 (Brubaker), US 1487920 (Dawson), US 1570048 (Dickensheet), US 5139066 (Jarman), and AU 502409 (Bayer). The proposals typically comprise a tyre having an annular body formed of elastomeric material such as rubber, and laterally extending cavities formed in the annular body and opening onto the sides thereof. The cavities are intended to provide the tyre with sufficient resilience for a cushioned ride.

Such proposals, in most cases, seek to provide a compromise between solid tyres which while not susceptible to puncturing do provide a harsh ride, and pneumatic tyres which while providing cushioning for a comfortable ride are susceptible to puncturing.

With such proposals, the tyre generally requires a considerable amount of elastomeric material in order to have the required load-carrying capacity and durability. This has several disadvantages, one relating to the cost of production of the tyre because of the quantity of elastomeric material required. Further, the amount of elastomeric material can be prejudicial to the cushioning characteristics of the tyre.

There is therefore a need to optimise the configuration of the cavities in the body of the tyre with a view to minimising the amount of elastomeric material employed for a given load-carrying capacity, while providing a tyre which is durable and which offers sufficient cushioning for a comfortable ride.

In the proposals referred to above, the configurations of the cavities have varied greatly from simple circular apertures such as proposed in Yberty, Krusemark, Dickensheet, Dawson, to more complex shapes such as proposed in Pepple and Bayer.

The proposals have not, however, provided non-pneumatic tyres which are altogether satisfactory. Krusemark (corresponding to the preamble of claim 1) discloses a cushion tyre of composite construction comprising a rubber mass formed by several layers of rubber blocks constrained by cord fabric loops. Each layer is discontinuous by virtue of its construction from rubber blocks. With this composite construction involving use of discrete rubber blocks, the tyre can be difficult to manufacture on a mass-production basis.

A typical problem with tyres of the type referred to above is that where such a tyre has sufficiently resilience to provide a cushioned ride there is a tendency under normal working loads for the cavities to deform to an extent which creates zones of high stress concentration at the cavity walls. These zones of high stress concentration arise from formation of areas having tight radii of curvature in the walls of the deformed cavities. The zones of high stress concentration are cyclically applied during rotation of the tyre, resulting in generation of heat which can lead to degradation of the tyre. Further, where the tyre is also subjected to high loadings (such as in acceleration or braking) the cavities may deform to such an extent that sections of the wall of each deforming cavity are forced into contact with one anther. Rotation of the tyre causes the contacting cavity wall sections to rub against each other which results in generation of further heat.

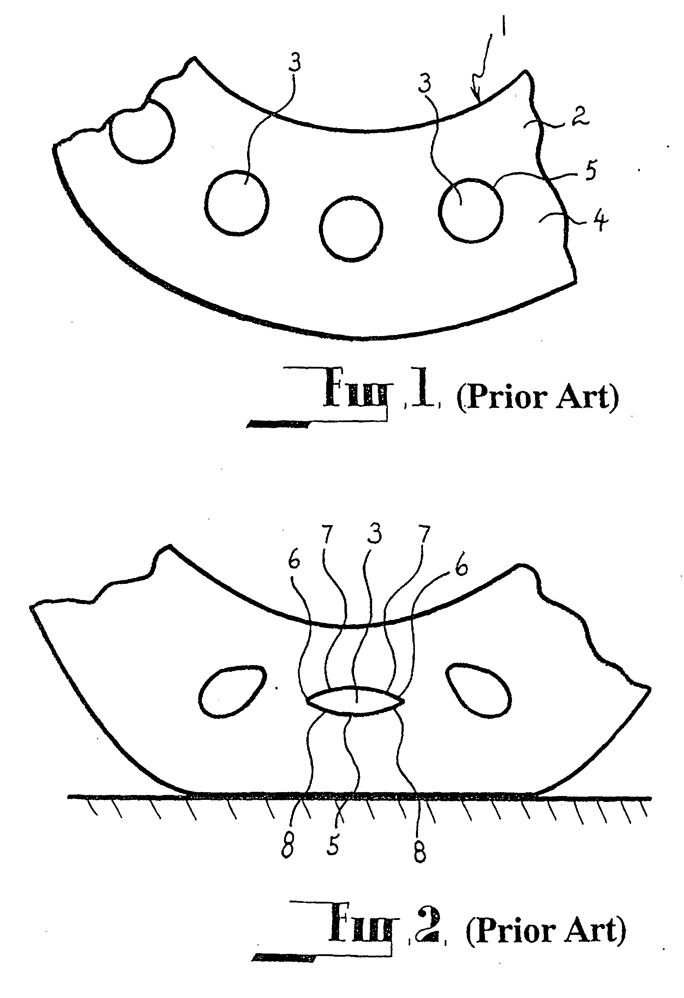

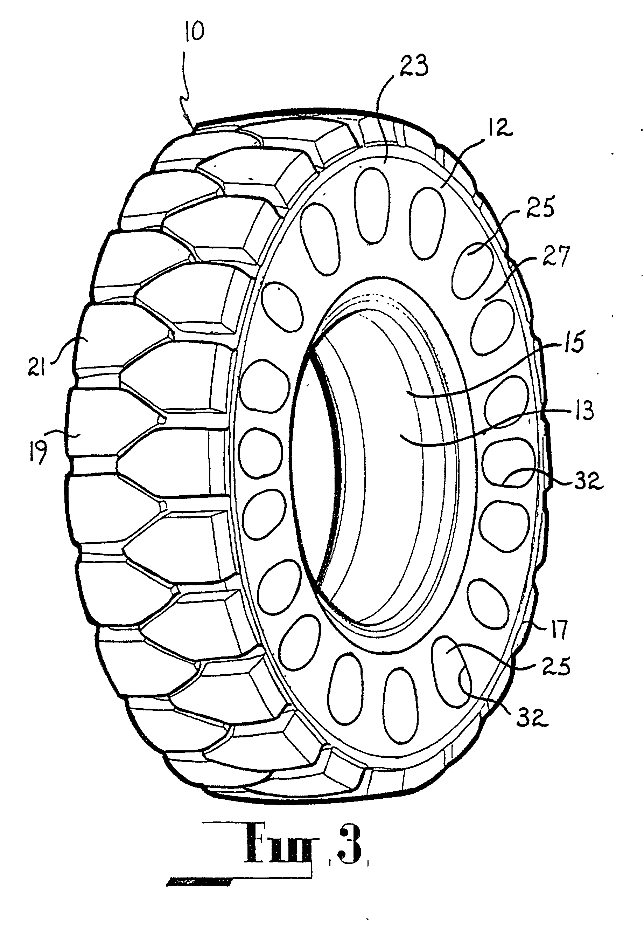

This problem is even likely to exist in non-pneumatic tyres having cavities which are circular in cross-section, for example as is the case in Yberty. The problem will be further explained with reference to Figs. 1 and 2 of the accompanying drawings which are schematic fragmentary side views illustrating a non-pneumatic tyre 1 comprising a body 2 of resilient material such as rubber formed with a plurality of circumferentially spaced cavities 3 which extend completely through the body in the transverse direction from one side wall 4 to the other side wall. Each cavity 3 is bounded by a cavity wall 5. In Fig. 1, the tyre 1 is illustrated in an unloaded condition in which the cavities 3 are of circular cross-section. In Fig. 2, the tyre 1 is illustrated in a condition in which it is deforming under a static load, resulting in the formation of zones 6 each having a tight radius of curvature between two sections 7, 8 of the cavity wall 5 which are urged into opposing relationship. The zones 6 at which there are tight radii of curvature in the cavity wall are applied cyclically as the tyre rotates and result in the generation of heat. If the tyre is subjected to a high loading (which is not shown) in addition to the static loading, it may deform to an extent that the opposed cavity wall sections 7, 8 adjacent one of the zones 6 are forced into contact with each other. Friction between the contracting cavity wall sections 7, 8 will generate further heat which will hasten degradation of the tyre.

It is an object of the invention to provide a non-pneumatic tyre of the kind set forth which overcomes, or at least reduces the effect of, at least some of the problems outlined in relation to the earlier proposals mentioned above for non-pneumatic tyres.

### Summary of the Invention

In order to achieve this object the present invention provides a tyre having the features of claim 1. The tyre comprising an annular body having first and second portions, said first portion being a radially inner peripheral portion for positioning on a wheel rim and the second portion being disposed radially outwardly of said first portion, said second portion being of resiliently deformable construction to provide cushioning and comprising a body of resiliently flexible material having opposed side walls and a plurality of longitudinal cavities each extending into at least part of said second portion from one of the side walls, wherein the second portion is of unitary construction and each cavity has a cross-sectional shape comprising a pair of spaced apart arcs with the concave sides thereof in facing relationship and intermediate lines extending between the arcs, said arcs having unequal radii of curvature, each cavity being bounded by a cavity wall and being arranged to assume a cross-sectional configuration upon resilient deformation of the body under normal static load conditions wherein said configuration inhibits formation of zones of high stress concentration at the cavity wall.

The cross-sectional configuration assumed by the cavity upon the resilient deformation of the body may be a closed curve.

The configuration of the cavity preferably inhibits deformation of the cavity wall to an extent which would allow wall sections thereof to come into contact one with another. In this way, deformation of the cavity wall to the extent where a tight radius of curvature is formed therein is also inhibited.

The cavity may be arranged to assume said cross-sectional configuration upon resilient deformation of the body through appropriate selection of the initial cross-sectional shape of the cavity in the undeformed condition of body.

There may be various cross-sectional shapes suitable for the cavity in the undeformed condition of the body. A feature common to the majority, if not all, of the suitable cavity cross-sectional shapes is that they are rounded without being circular.

The intermediate lines extending between the arcs may be curved or straight. Where the intermediate lines are curved, the shape of the cavity in cross section may be a closed curve such as an ovoid. Preferably, the cavity is longitudinal and of a substantially constant orientation throughout its length within the body.

In the undeformed condition of the body, the cavity may be elongate in cross-section. In such a case, the elongate cavity may be so disposed that the major axis of the cross-sectional shape of the cavity is substantially normal to the direction of cyclical movement of the ground-engaging structure. For instance, where the ground-engaging structure is a tyre, the major axis of the cavity cross-sectional shape would be aligned with a radial axis of the tyre.

The feature whereby the cavity is elongate in cross-section and oriented such that the major axis of the cross-sectional shape is substantially normal to the direction of cyclical movement of the ground-engaging structure is advantageous for such a structure which is intended for bi-directional use. This is because the major extent of the cavity in cross-section is aligned with vertical loadings imposed on the deforming body of the ground-engaging structure when subjected to static loads. In this way, the cavity wall is better able to deform on resilient deformation of the body of the ground-engaging structure without distorting to provide a zone having a tight radius of curvature within the cavity or having surfaces of the cavity wall coming into contact with each other.

The circumstances where the ground-engaging structure is of uni-directional use, it may be that the major axis of the cross-section of the cavity is inclined to the normal direction of cyclical movement in order to resist torsional loadings on the structure.

Regardless of whether the cavity is elongate in cross-section, it preferably has two opposed end portions in cross-section which are aligned with a direction substantially normal to the direction of cyclical movement of the ground-engaging structure. In other words, the two end portions of the cross-section are in opposing relationship and spaced along a line which extends therebetween normal to the direction of cyclical movement of the ground-engaging structure. One of the end portions may be enlarged with respect to the other.

In addition to enhancing resilience of the body, the cavities provide ventilation for assisting in heat dissipation.

The cavities conveniently each extend cross-wise through the body with both ends of the cavity opening onto the exterior of the body. Other arrangements are, however, possible. The cavities may be open at one end and closed at the other end. The cavities may also be open at both ends and closed internally. There may also be combinations of such arrangements, with some cavities having one arrangement and other cavities having different arrangements.

Where it is desirable to provide a non-pneumatic tyre which resembles a pneumatic tyre, the cavities may be arranged to open only onto a common side of the resiliently deformable body. With this arrangement, all of the cavities would be visible when the tyre is viewed from the common side but none of the cavities would be visible when the tyre is viewed from the opposite side. The opposite side may then provide the appearance of a pneumatic tyre or at least provide an uninterrupted side wall area onto which a manufacturer can emboss or otherwise incorporate trade mark and/or other marketing indicia onto the tyre.

The cavities may be in a circumferentially spaced apart relationship. The spacing between neighbouring cavities may be substantially equal. The circumferential spacing between the cavities provides load-supporting webs between the cavities.

The cavities may comprise a first set of cavities within the resiliently deformable body.

There may be a second set of cavities in the resiliently deformable body. The cavities in the second set may be of any appropriate cross-sectional shape and not necessarily a shape which has the features of the cavities of the first set. For example, the cavities in the second set may have a cross-sectional shape which is simply circular in the undeformed condition of the body. It may, however, be desirable for the cavities of the second set to have the features of the cavities of the first set, particularly if they would otherwise be susceptible to formation of zones of high stress concentration.

The cavities in the second set may be in a circumferentially spaced apart relationship.

The cavities in the first and second sets may be in a staggered relationship with respect to each other or there may be alignment between the cavities. In the latter case, each cavity in the second set may be aligned with a respective cavity in the first set along a line normal to the direction of cyclical movement of the ground-engaging structure. Thus, in a tyre the respective aligned cavities would be aligned along a radial axis of the tyre.

The resiliently deformable body may incorporate reinforcement for the purpose of enhancing the strength and durability of the ground-engaging structure.

In one arrangement, the resiliently deformable body may have an outer surface for contact with the ground, in which case it may be provided with a tread formation. In another arrangement, the outer surface of the resiliently deformable body may be adapted to support another structure which provides the tread or otherwise facilitates engagement with the ground.

The resiliently deformable body has an inner surface for engagement with a wheel rim.

The second portion may be of layered construction comprising an outer layer presenting a tread for engagement with the ground and an intermediate layer disposed between the outer layer and said first portion.

The outer layer is preferably elastomeric material having wear resistance characteristics suitable to provide a tread structure such as rubber having a hardness of about 63 to 75 Shore A and preferably within the range 65 to 70 Shore A.

The intermediate layer is preferably of elastomeric material suitable to provide load support and cushioning, such as rubber having a hardness of about 55 to 75 Shore A.

In one arrangement, the inner portion may be formed of elastomeric material of a hardness suitable for gripping engagement with the cyclically movable support, such as rubber having a hardness of about 75 to 96 Shore A and preferably within the range 80 to 90 Shore A. With such an arrangement, the inner portion may include reinforcing means such as circumferential reinforcing rings. In another arrangement, the inner portion may comprise a substantially rigid band such as a steel ring.

The inner portion may be of integral construction or it may be of a split construction so that it can expand and contract to facilitate installation of the tyre onto the support. In the case of a split construction, the inner portion may comprise a plurality of segments positioned in circumferential relationship such that the segments can move into a circumferentially spaced apart relationship upon expansion of the inner portion.

While the cavities are preferably located entirely within the intermediate layer, they may also penetrate the outer layer or the inner portion, or both of the outer layer and the inner portion.

### Brief Description of the Drawings

The invention will be better understood by reference to the following description of various specific embodiments thereof.

The description will be made with reference to the accompanying drawings in which:
Fig. 1 is a schematic view of a non-pneumatic tyre of the type known in the prior art, with the tyre being illustrated in an unloaded condition;
Fig. 2 is a view similar to Fig. 1 with the exception that the tyre is illustrated in a deformed condition under a static load;
Fig. 3 is a perspective view of a tyre according to a first embodiment;
Fig. 4 is a fragmentary perspective view of the tyre of the first embodiment;
Fig. 5 is a fragmentary side elevational view of the tyre of the first embodiment;
Fig. 6 is a fragmentary schematic elevational view illustrating the tyre of the first embodiment in contact with the ground and deflecting under a static load condition;
Fig. 7 is a view similar to Fig. 6 except that the tyre is shown deflecting under a high torque loading condition;
Fig. 8 is a side view of a wheel fitted with a tyre according to a second embodiment, the tyre being of composite construction comprising an assembly of tyre segments;
Fig. 9 is a perspective view of a tyre segment for the tyre of Fig 8;
Fig. 10 is a perspective view of a tyre according to a third embodiment;
Fig 11. is a side view of the tyre of Fig 10 shown fitted on a wheel rim;
Fig. 12 is an end view of the tyre of the third embodiment showing the tread structure;
Fig. 13 is a cross-sectional view along the line 13-13 of Fig. 11;
Fig. 14 to 20 inclusive are schematic views of the tyre according to the third embodiment deflecting under various static loads;
Fig. 21 is a cross-sectional view of a tyre according to a fourth embodiment fitted onto a wheel rim;
Fig. 22 is a cross-sectional view of a tyre according to a fifth embodiment fitted onto a wheel rim;
Fig. 23 is a side view of a tyre according to a sixth embodiment;
Fig. 24 is a schematic side view of the tyre of a seventh embodiment deforming under load;
Fig. 25 is a fragmentary side view of the tyre of the seventh embodiment showing the deformation under load;
Fig. 26 is a side view of a tyre according to an eighth embodiment;
Fig. 27 is a fragmentary side view of the tyre according to the eighth embodiment;
Fig. 28 is a side view of a tyre according to a ninth embodiment;
Fig. 29 is a fragmentary view on an enlarged scale showing the configuration of apertures in the embodiment of Fig. 28;
Fig. 30 is a fragmentary view showing the configuration of apertures in a tyre according to a tenth embodiment;
Fig. 31 is a schematic side view of a tyre according to an eleventh embodiment;
Fig. 32 is a cross-sectional view of the tyre according to the embodiment; of Fig. 31;
Fig. 33 is a cross-sectional view of a tyre according to a twelfth embodiment;
Fig. 34 is a schematic view of a tyre segment for assembly along with other such tyre segments to provide a tyre according to a still further embodiment;
Fig. 35 to 39 inclusive illustrate various other shapes for cavities in ground-engaging structures according to the invention when in an undeformed condition;
Fig. 40 is a schematic side view of an endless track for a tracked vehicle incorporating a ground-engaging structure according to a still further embodiment.
Fig. 41 is a schematic perspective view of an endless track providing a ground-engaging structure according to a still further embodiment; and
Fig 42 is a fragmentary view of the ground-engaging structure of Fig. 41.

### Description of Preferred Embodiments

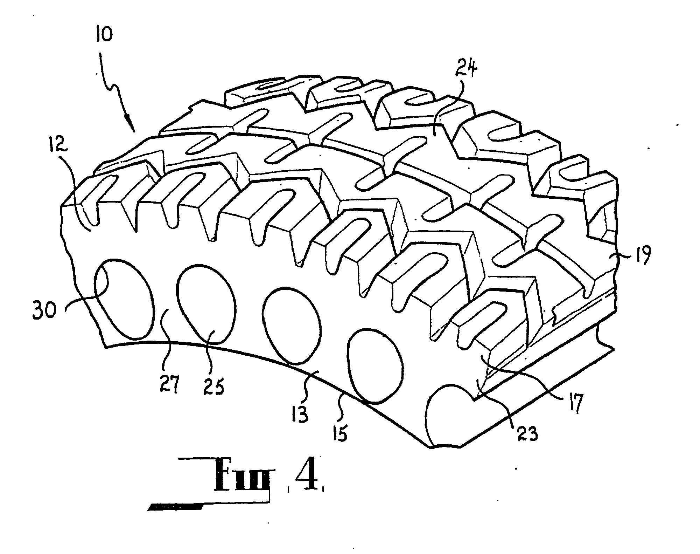

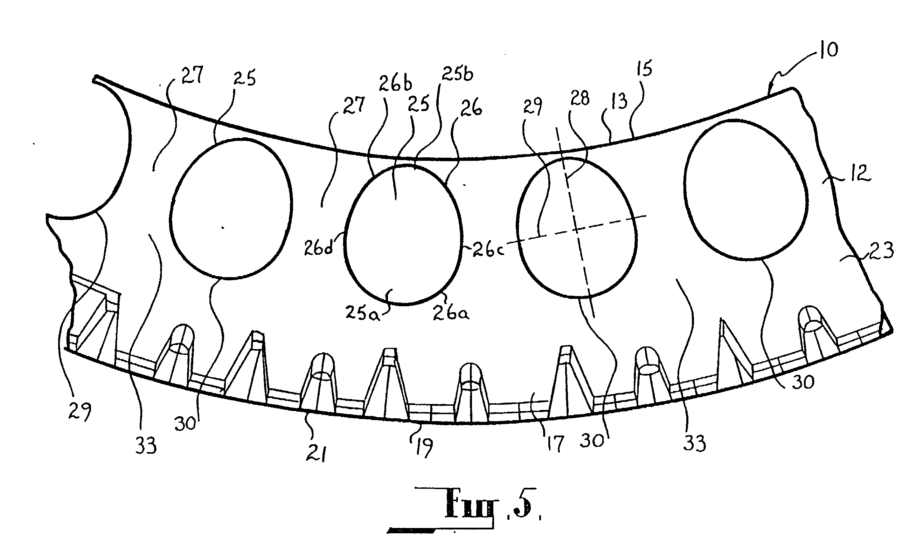

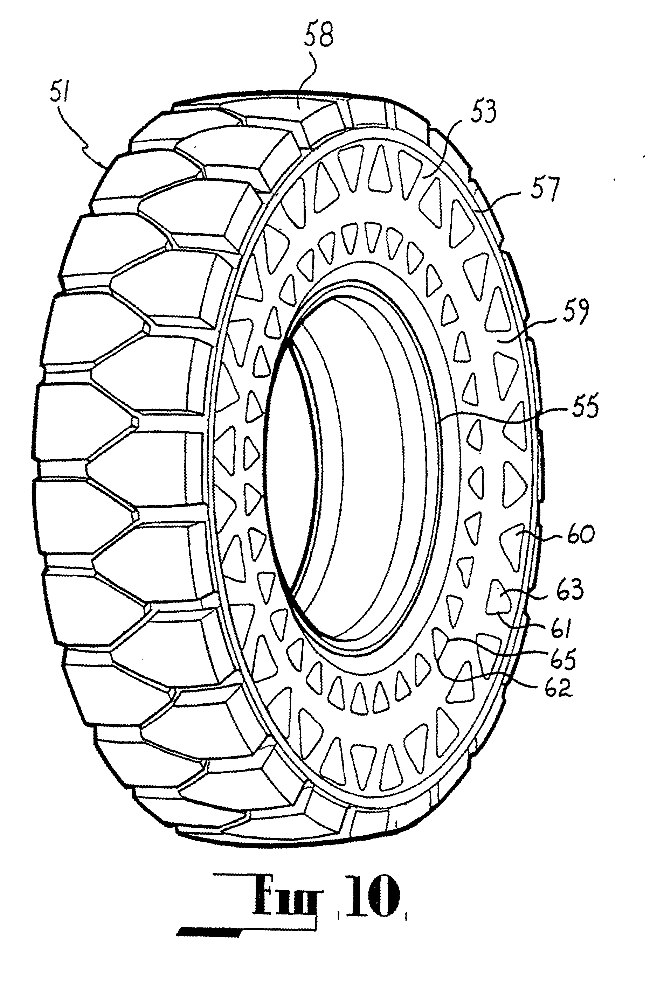

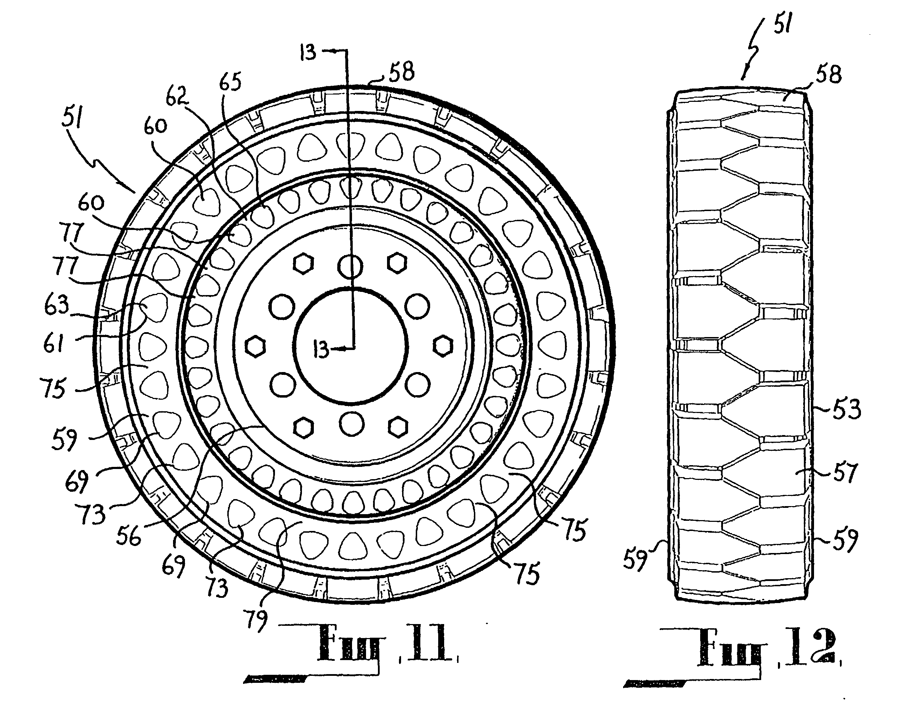

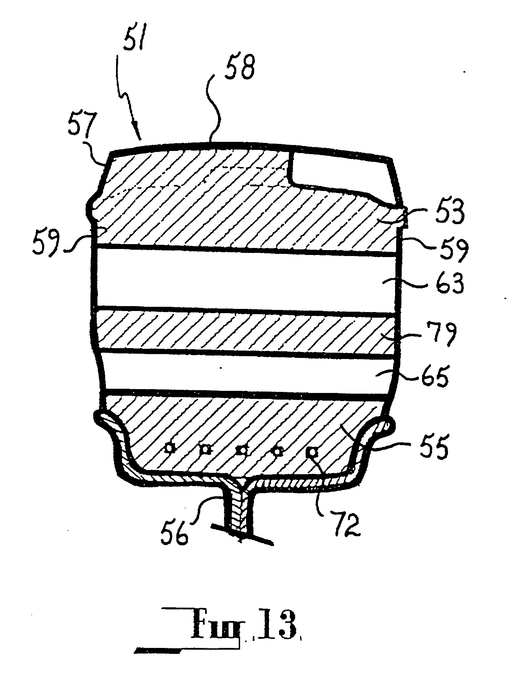

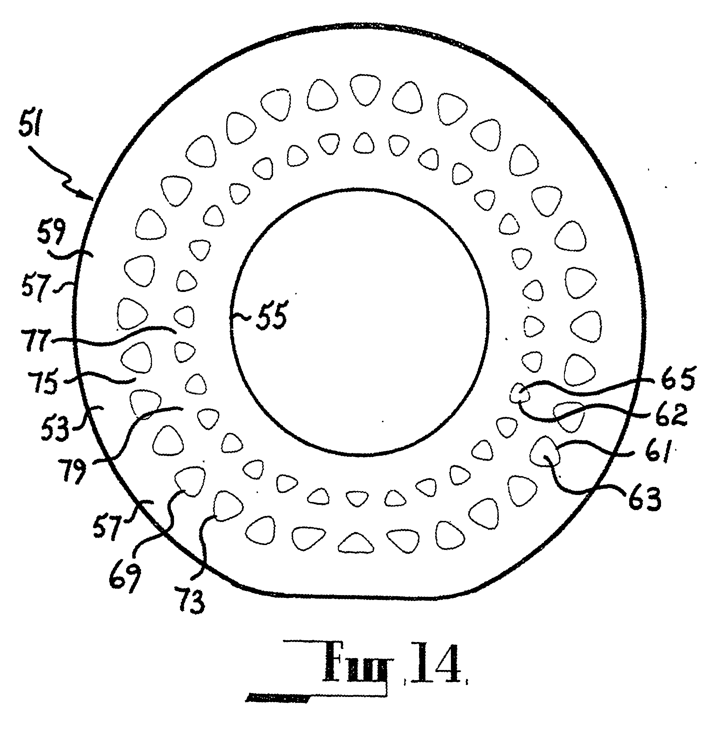

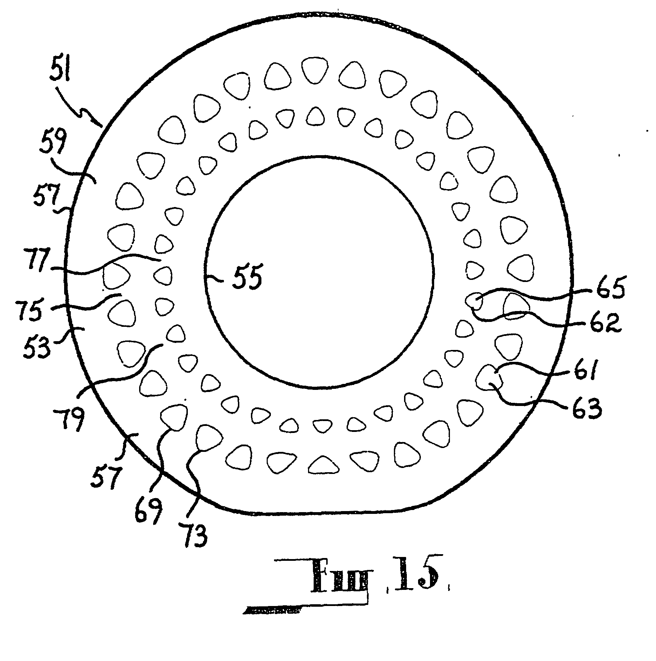

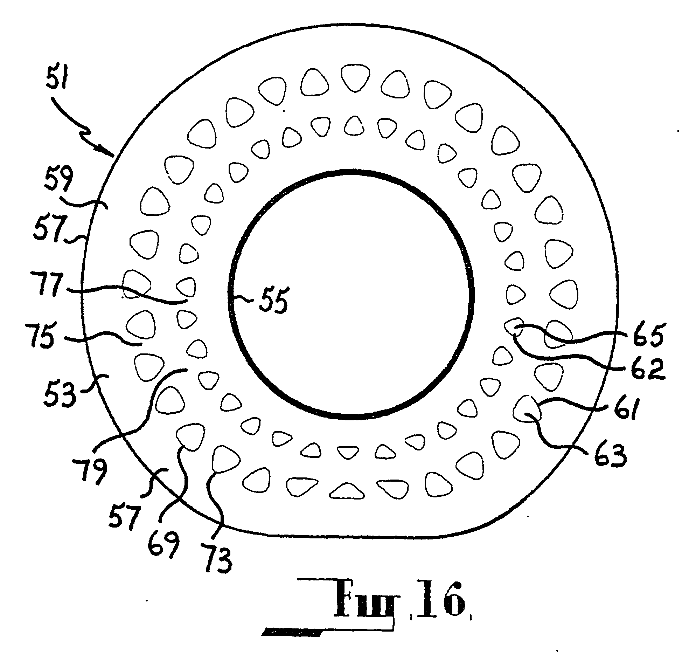

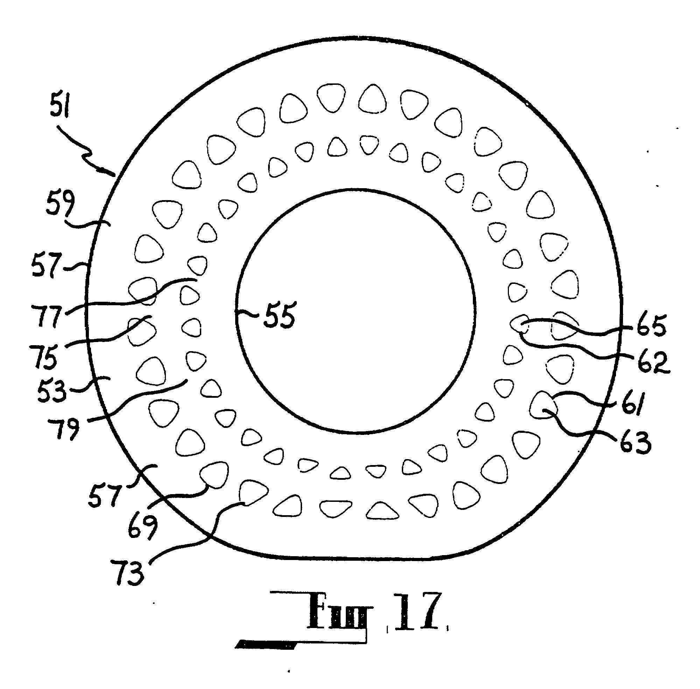

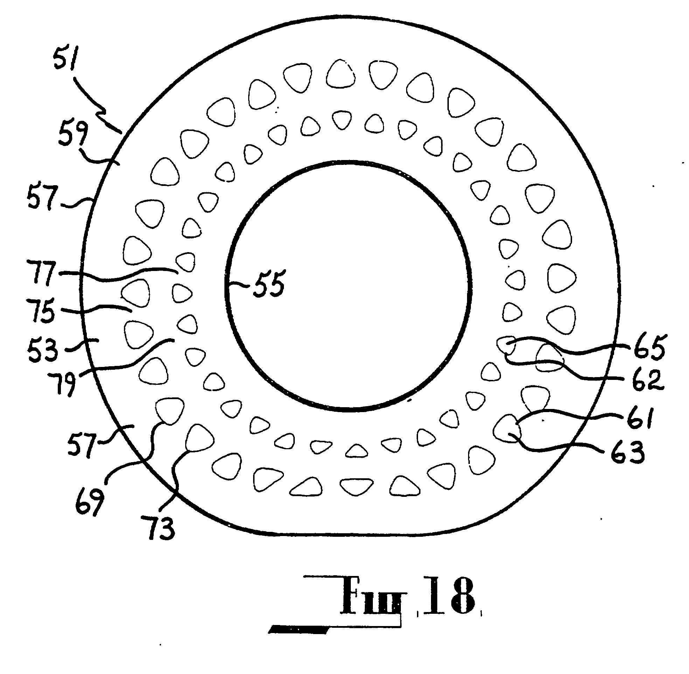

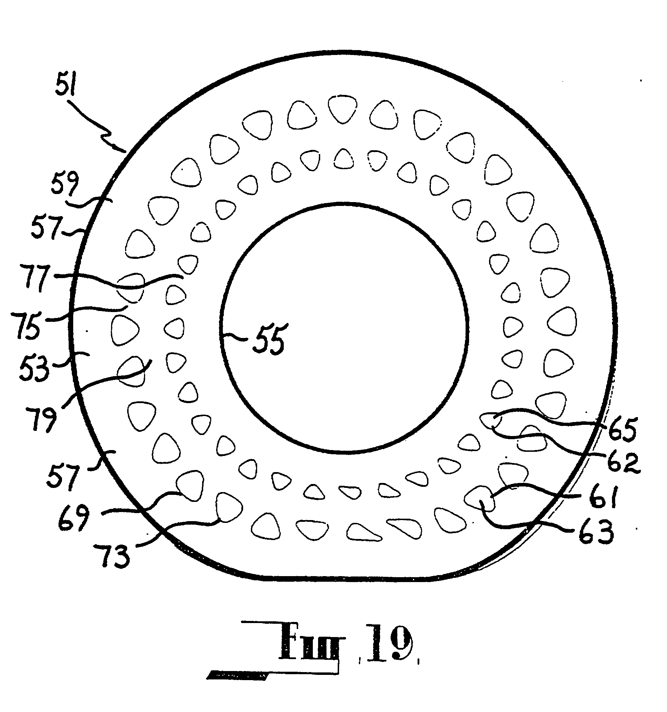

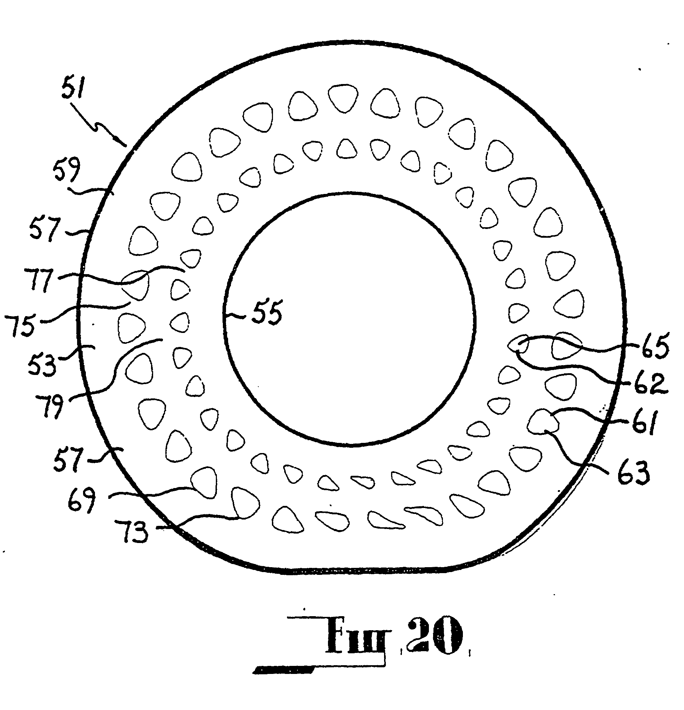

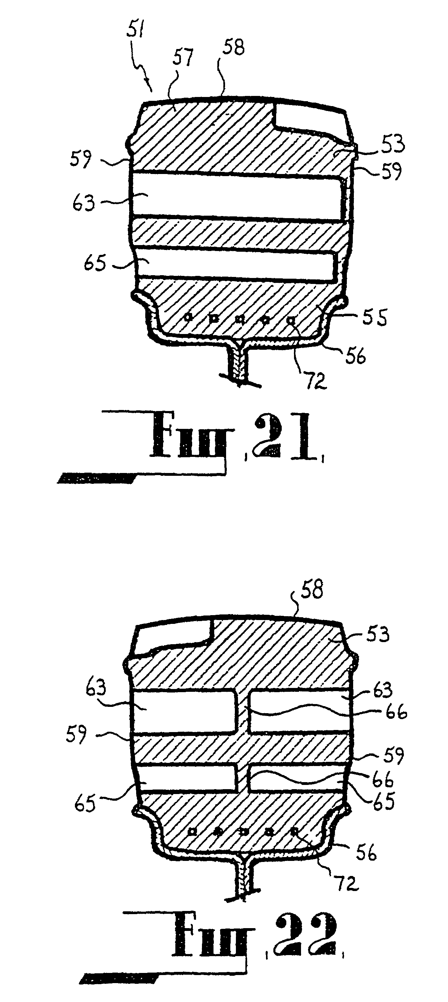

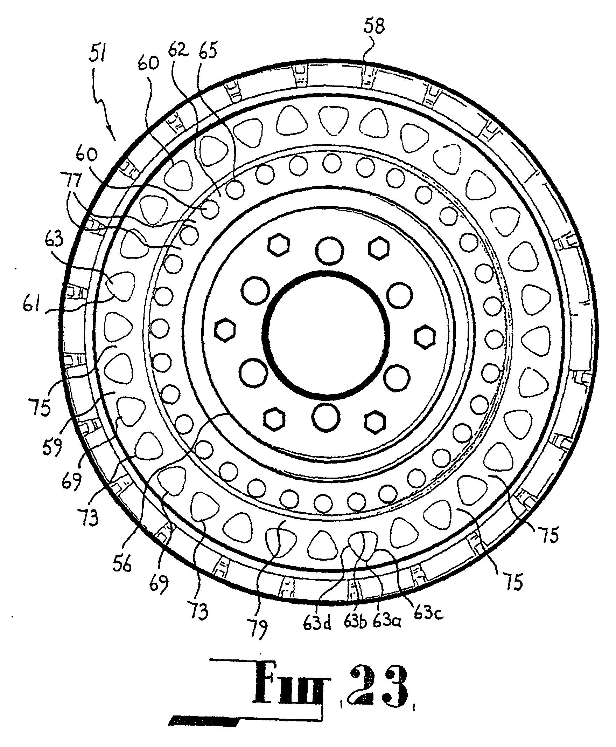

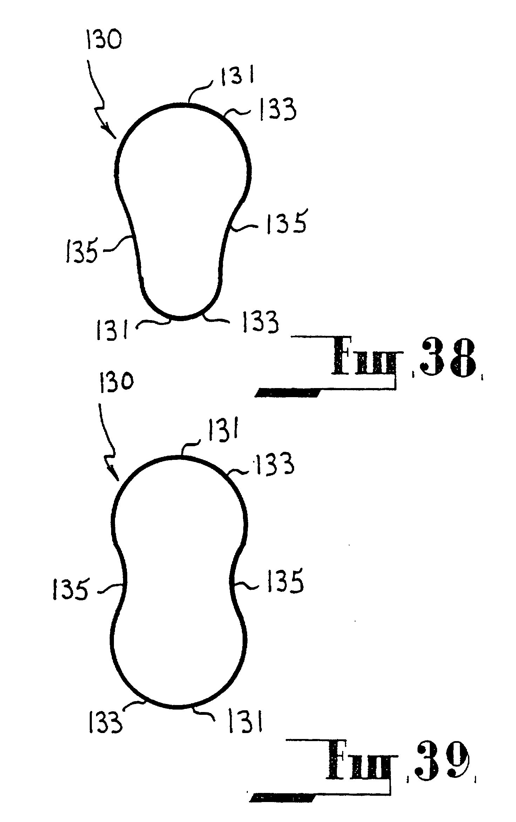

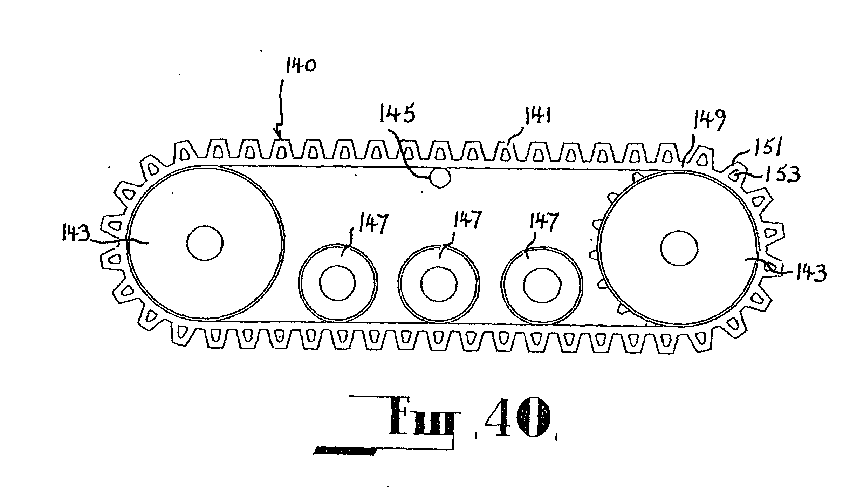

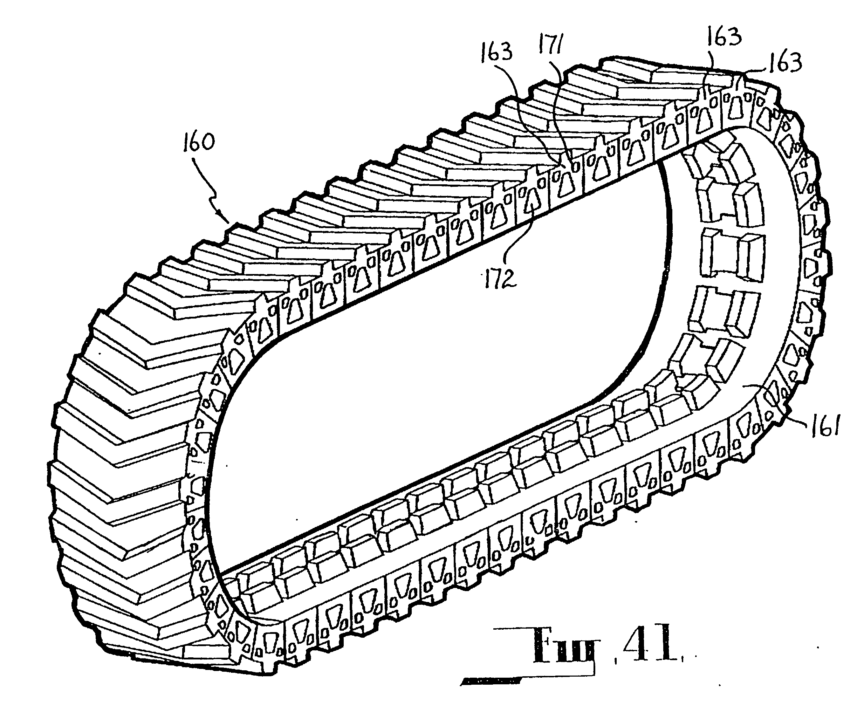

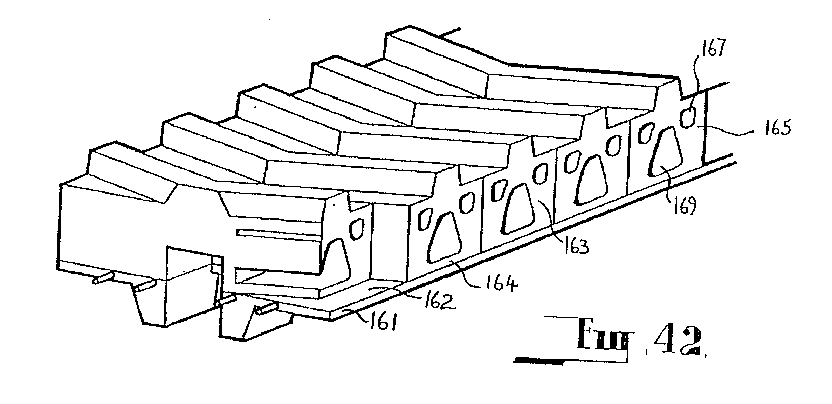

It should be noted that the embodiments shown in Figs. 3-30, 33, 34, 36, 37 and 39-42 do not form part of the invention. These embodiments represent background art which assists in understanding the invention.

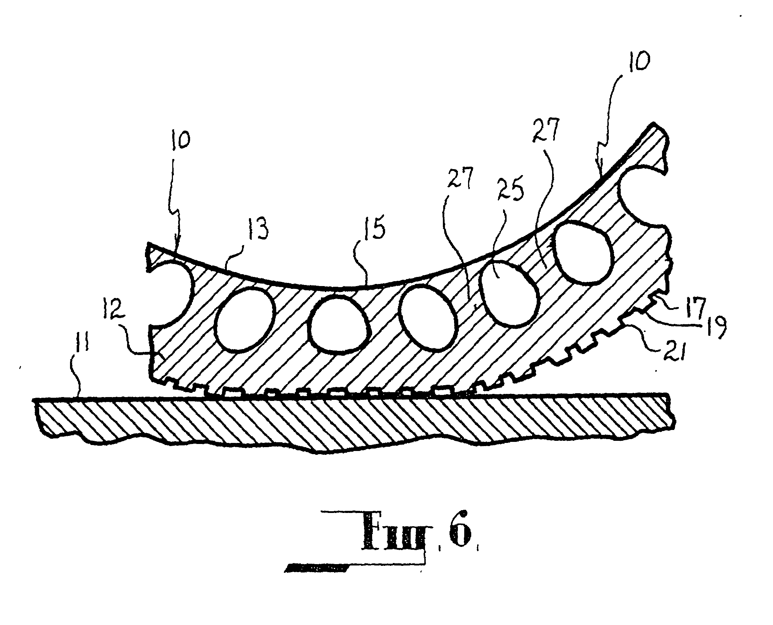

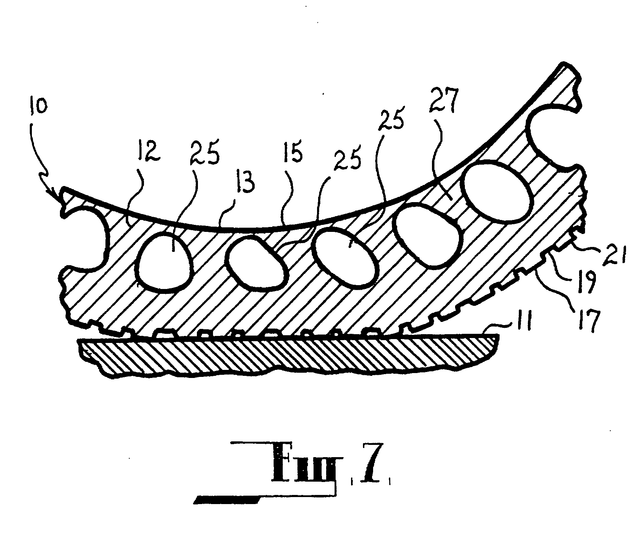

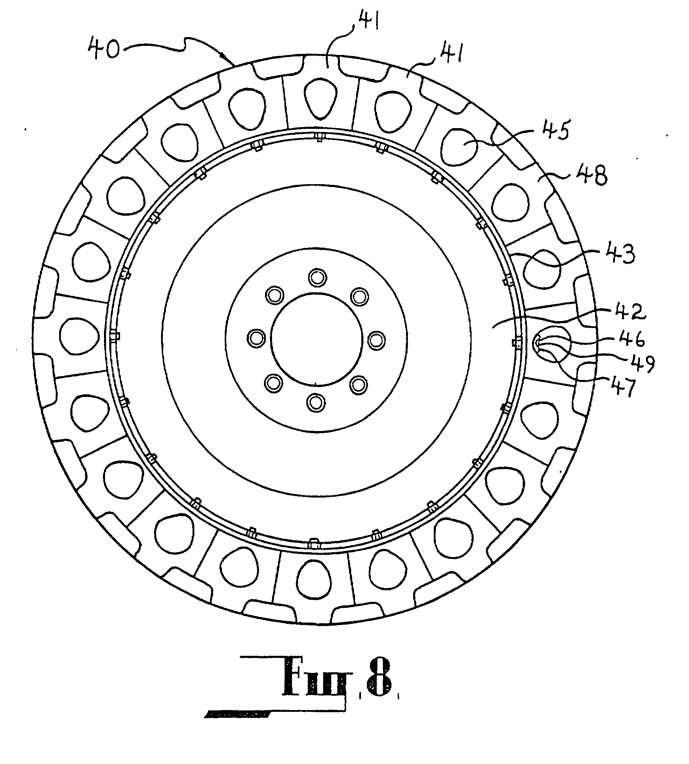

The embodiment shown in Figs. 3 to 7 of the accompanying drawings is directed to a cyclically movable ground-engaging structure in the form of a non-pneumatic tyre 10 which is intended primarily for'operation in rough terrain and would typically be used on vehicles with a four-wheel-drive capability. The tyre 10 is shown in engagement with a ground surface 11 in Figs. 6 and 7 of the drawings.

The tyre 10 comprises an annular body 12 formed of elastomeric material such as rubber. The annular body 12 may incorporate suitable reinforcement, although no such reinforcement is illustrated in the drawings.

The annular body 12 comprises a radially inner end 13 including inner face 15 for engagement with a cyclically movable support such as a wheel rim (not shown) and a radially outer end 17 including outer face 19 for contact with the ground. A tread formation 21 is provided in the outer face 19 for gripping engagement with the ground surface. A pair of opposed side walls 23 extend between the inner portion 13 and outer portion 17.

A plurality of circumferentially spaced longitudinal cavities 25 are provided within the annular body 12. Each cavity is bounded by a cavity wall 32. The cavities are each of a constant orientation within the annular body 12 throughout the length of the cavity. The cavities 25 provide core holes which extend between, and open onto, the opposed side walls 23. In this embodiment, the cavities 25 are positioned in close proximity to the radially inner face 15, as shown in the drawings.

The circumferential spacing of the cavities 25 provides load-supporting webs 27 therebetween.

Each cavity 25 has a cross-sectional shape which is an elongate closed curve 26 of ovoidal form. The closed curve 26 defining the cross-sectional shape of each cavity 25 can be considered as two arcs 26a, 26b respectively defining a radially outer end portion 25a and a radially inner end portion 25b of the cross-sectional shape of the cavity, as shown in Fig. 5. The arcs 26a, 26b are connected by intermediate lines 26c, 26d to complete the closed curve. The intermediate lines 26c, 26d are arcuate.

The elongate closed curve 26 of each cavity 25 has a major axis 28 centred along the length thereof, as shown in Fig. 5. The closed curve 26 also has a further axis 29 which is transverse to the major axis 28 and which corresponds to the maximum transverse dimension (width) of the curve.

The cavities 25 are each oriented such that the larger end thereof is disposed towards the radially outer end of the tyre. The ovoidal shape of each cavity 25 and the orientation of the cavity provides an arrangement in which the centroid of the cavity is adjacent to the end thereof which is towards the radially outer end of the tyre. With this orientation, the major axis 28 of the ovoidal shape extends in a radial direction of the tyre.

The ratio of the dimension of each cavity 25 along the major axis 28 to the dimension along the further axis 29 is up to 2:1. More particularly, the ratio is in the range 1.1:1 to 1.7:1, and is preferably 1.2:1.

The ratio of up to 2:1 is advantageous as it provides a tyre which has sufficient resilience for a comfortable ride while providing adequate load support for normal working conditions.

The ovoidal shape of the cavities 25 is particularly useful. It provides each cavity with a raised ceiling portion 30 which provides good support for the region 31 of the annular body 12 disposed outwardly of the cavity such that the load supporting characteristics of that region is somewhat similar to the load supporting characteristics of the neighbouring regions 33 disposed outwardly of the webs 27 between the cavities. This provides a smooth, cushioned ride as the tyre rolls over the ground. If the load carrying characteristics between the regions 31 and 33 were substantially different, the tyre may provide an uneven ride when travelling over smooth surfaces.

The ovoidal configuration of the cavities 25 also avoids, or at least inhibits, formation zones having tight radii of curvature which generate stress raisers within the annular body 12 when it is under normal working loads, being either static loads as illustrated in Fig. 6 or torque loads as illustrated in Fig. 7. Indeed, under static loading as illustrated in Fig. 6, the radius of curvature of each of the arcs 26a, 26b increases with the result that the cross-section configuration of the cavity approaches a circular form. This discourages formation of stress raisers of the type of concern. The presence of stress raisers can generate excessive heat which contributes to deterioration of the tyre and a reduction of its service life.

Referring particularly to Fig. 7, the tyre 10 when subjected to high tractive load distorts to an extent that the cavities 25 develop an elongated, skewed shape but still maintain a substantially rounded condition. Consequently, zones having tight radii of curvature of the type illustrated in the prior art tyre shown in Fig. 2 are not developed.

The ovoidal configuration of the cavities 25 is also beneficial in the sense that it removes elastomeric material from the annular body 12 in regions where the elastomeric material is unnecessary. This serves several purposes, one being that it reduces the amount of elastomeric material used in the production of the tyre and so consequently produces a reduction in costs, and another being that it reduces the amount of material which can generate heat during operation of the tyre.

The cavities are sufficiently large so as to provide for good air-flow characteristics through the tyre to assist in dissipation of heat.

While in this embodiment, the radially outer arc 26a has a larger radius of curvature than the radially inner arc 26b, a reverse arrangement may well apply in other situations.

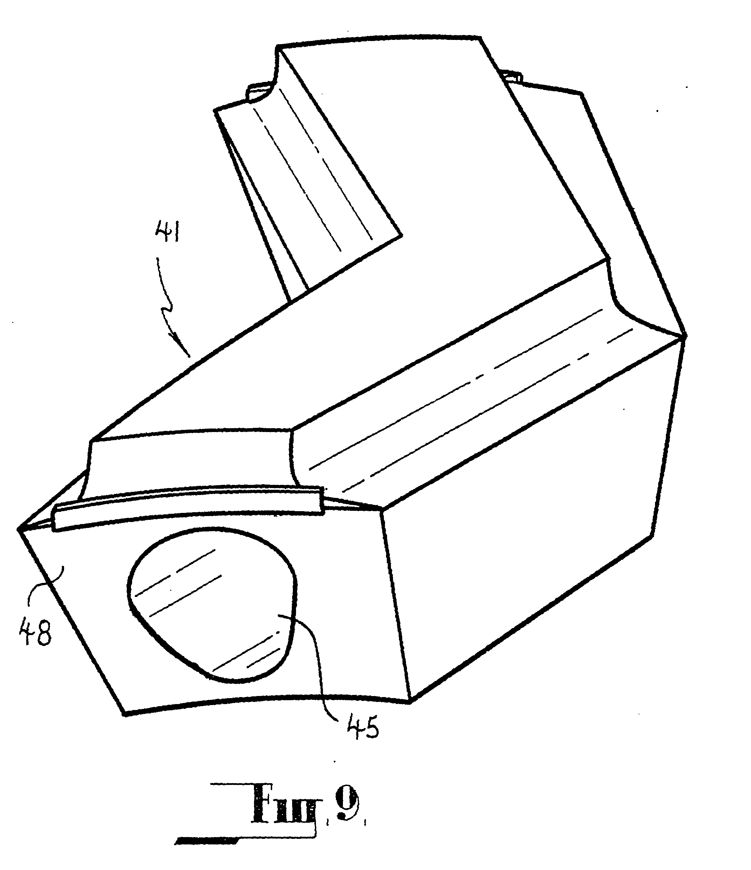

The tyre according to the first embodiment is of one-piece construction. The second embodiment, which is illustrated in Figs. 8 and 9 of the drawings, is directed to a tyre 40 which is somewhat similar to the tyre 10 of the first embodiment with the exception that, rather than being of one-piece construction, it is of composite construction which can be assembled from a plurality of tyre segments 41. Each tyre segment 41 comprises a body 48 of resiliently deformable tubular construction to provide the necessary cavity 45 therein. The tyre segments 41 can be positioned in circumferentially end-to-end relationship around a cyclically movable support in the form of a wheel rim 42 to provide the composite tyre 40. Each tyre segment 41 is adapted to be individually and removably fixed on a support face 43 of the wheel rim 42 by any suitable means such as by bonding or by a fastening system 46 which includes a clamping plate 47 received in the cavity 45 and secured to the wheel rim 42 by securing bolts 49. Fixing the tyre segments 41 to the wheel rim 42 in such fashion allows them to be replaced on an individual basis in the event of damage.

The tyre segments 41 are a V-shape as shown in Fig 9 so that they can be mounted in interlocking engagement one with another on the wheel rim 42.

Referring now to Figs. 10 to 20 of the accompanying drawings, a tyre 51 according to the third embodiment comprises an annular body 53 formed of resiliently deformable material such as rubber. Reinforcement is incorporated into the rubber, as will be explained later.

The annular body 53 has an inner portion 55 configured to fit onto a wheel rim 56 and an outer portion 57 provided with a tread 58 for contact with the ground. The body 53 also has opposed sides 59. The wheel rim 56 in this embodiment is a conventional split-rim.

A plurality of cavities 60 are provided in the annular body 53 to enhance its resilience for the purposes of providing a cushioned ride. The cavities extend cross-wise through the annular body 53 and open onto the opposed sides 59 thereof. The cavities 60 are arranged in two sets, being cavities 63 in a first set 61 and cavities 65 in a second set 62. The cavities 65 in the second set 62 are positioned radially inwardly of the cavities 63 in the first set 61, as shown in the drawings.

The cavities in each set 61, 62 are positioned in circumferentially spaced apart relationship. There is a one-to-one correspondence of cavities 63 in the first set 61 with respect to cavities 65 of the second set 62 whereby each of the cavities in the first set is aligned with one of the cavities in the second set in the radial direction of the tyre. In this embodiment, the radial alignment is such that each of the cavities 63 in the first set 61 is centred on a radial line which passes through the centre of the respective cavities 65 in the second set 62.

The cavities 63 in the first set 61 are of larger cross-sectional area than the cavities 65 in the second set 62. An advantage of the cavities 63 being of a larger cross-sectional area than the cavities 65, is that it avoids use of excessive elastomeric material in the outer region of the tyre where it is structural unnecessary. This has two benefits; first, it provides the outer peripheral region of the tyre with greater resilience than the inner region, and secondly, it reduces the amount of elastomeric material within the tyre so reducing the amount of heat likely to be generated during operation of the tyre. The greater resilience of the outer peripheral region of the tyre provides for a relatively soft ride in load conditions. As loading increases, the impact of reduced resilience of the inner peripheral region progressively increases so providing a progressively harder ride.

In this embodiment, the cavities 63, 65 are of generally triangular configuration with rounded corners. The rounded nature of the cavities 63 and 65 avoids, or at least inhibits, formation of zones of tight radii of curvature at the walls of the cavities as the annular body deforms under normal working loads. The tyre is shown in Figs. 14 to 20 in conditions in which it is deflecting under the influence various static loadings.

The cavities 63 in the first set 61 are oriented in alternate arrangements such that some cavities have a base 69 thereof outermost and alternate cavities have an apex 73 thereof outermost. With this arrangement, load-bearing webs 75 defined between neighbouring cavities 63 in the first set 61 have a substantially constant wall thickness. The arrangement also provides the webs 75 with an orientation with respect to the radial direction of the tyre. More particularly, neighbouring webs 75 are inclined in opposing directions, as shown in the drawings. The feature whereby the load-bearing webs 75 are inclined with respect to the radial direction of the tyre, and in alternate opposing directions, provides the tyre with the ability to withstand high torque loadings. The inclined load-bearing webs 75 act as braces to resist circumferentially twisting between the outer and inner regions of the tyre when the tyre is subjected to high torque loadings.

The spacing between cavities 65 in the second set 62 also provides load-bearing webs 77.

Because the cavities 63 in the first set 61 are each aligned with a respective one of the cavities 65 in the second set 62, a circumferential web 79 is defined between aligned cavities 63 and 65.

The arrangement of the various webs 75, 77 and 79 provides a system for distributing vertical and tractive loads imposed on the tyre within the tyre so that the loadings are not localised in the region of ground contact.

The inner portion 13 of the tyre incorporates reinforcing strands 72.

While the cavities 63 in the first set 61 have been shown centred on a common pitch circle, it should be understood that they may be arranged in some other arrangement such as a staggered arrangement. Similarly, while the cavities 65 in the second set 62 have also been shown centred on a common pitch circle it should be understood that they may be arranged in any other suitable fashion.

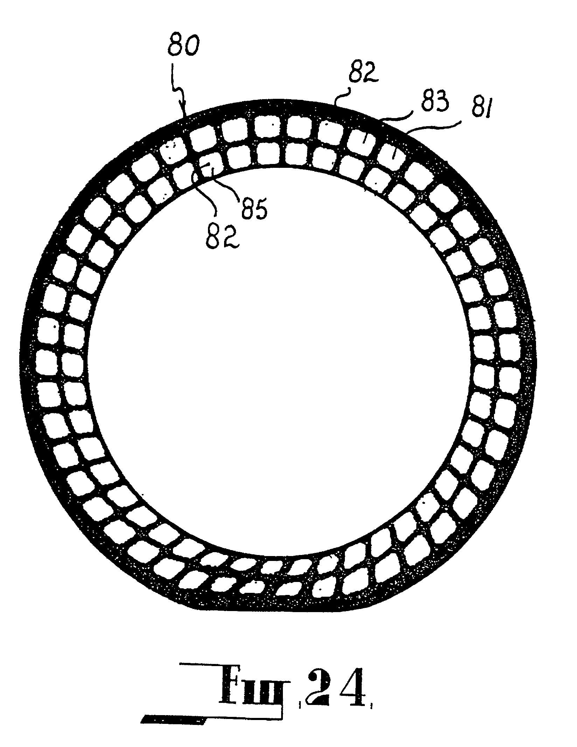

In this embodiment, the cavities 60 extended completely through the annular body 53. There may be circumstances where it is advantageous for the cavities not to extent completely through the body. Referring now to Fig. 21, there is illustrated a tyre according to a fourth embodiment which is similar to the tyre of the third embodiment except that the cavities 63, 65 open onto one side of the tyre only. More particularly, the cavities 63, 65 extend laterally into the annular body 53 from a common side 59 thereof and terminate inwardly of the opposed side of the body. In this way, the cavities 63, 65 are not visible from the opposed side of the body 53, and thus when viewed from that side the tyre does not have the appearance of a non-pneumatic tyre incorporating cavities to provide resilience. The opposed side of the tyre provides an uninterrupted surface onto which a manufacturer may incorporate trade mark material or other indicia such as information relating to the size and load-carrying characteristics of the tyre.

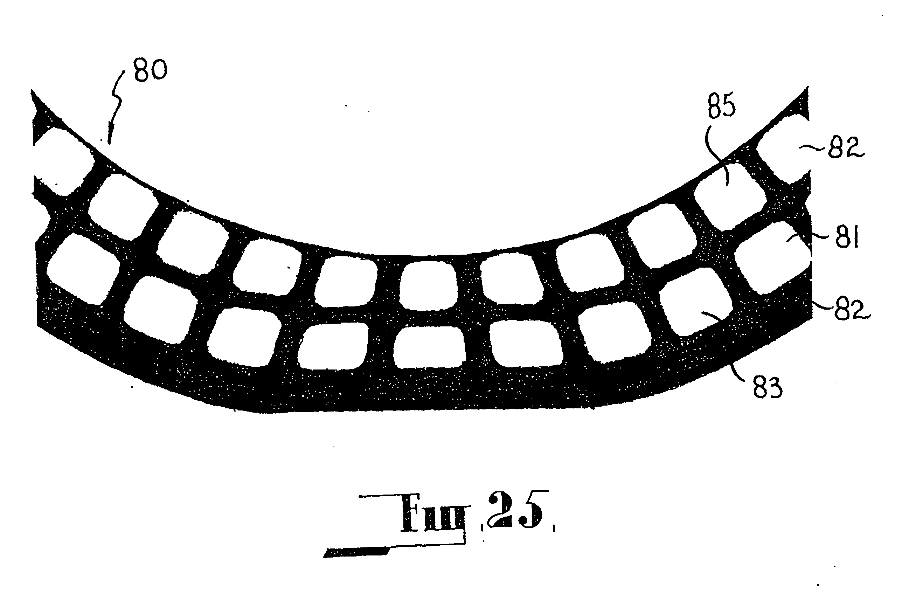

The fifth embodiment, which is shown in Fig. 22, is also similar to the third embodiment except that cavities 63, 65 extending laterally into the body from both sides are positioned in pairs, with the two cavities of each pair being on opposite sides of the tyre and extending laterally inwardly in opposed relationship. The two cavities of each pair terminate inwardly of each other to define a partition 66 therebetween.

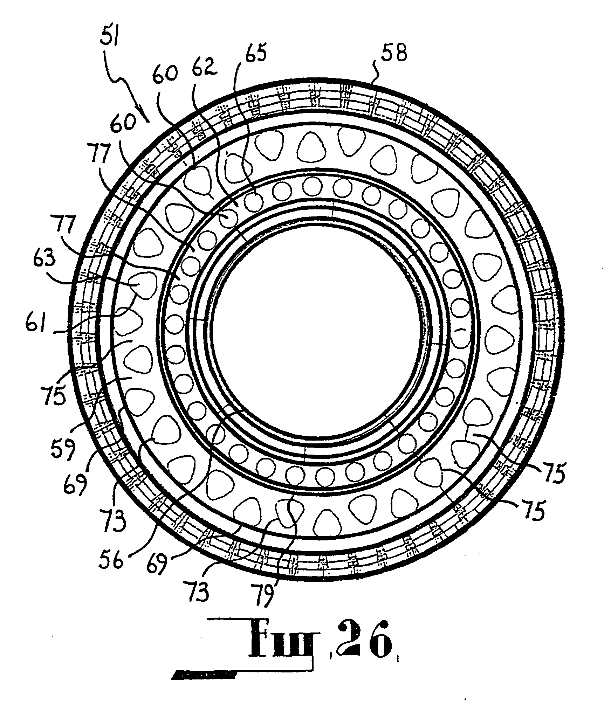

Referring now to the sixth embodiment, which is shown in Figs. 23 of the drawings, there is shown a tyre 51 which is somewhat similar to that of the third embodiment with the exception that the cavities 65 in the second set 62 are of generally circular configuration.

The tyres according to the fourth, fifth and sixth embodiments are arranged to operate at relatively high load and low speed conditions. These conditions normally apply in industrial and mining environments. One particular application for the tyres is on forklifts.

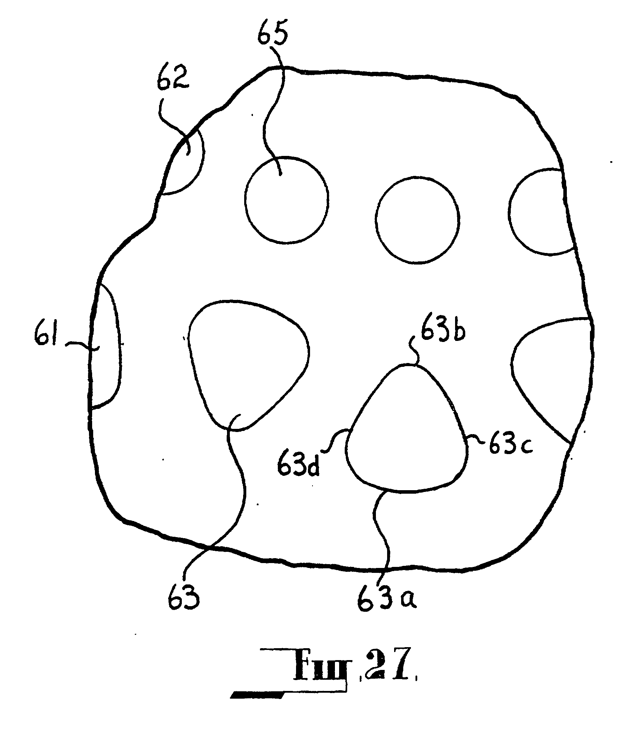

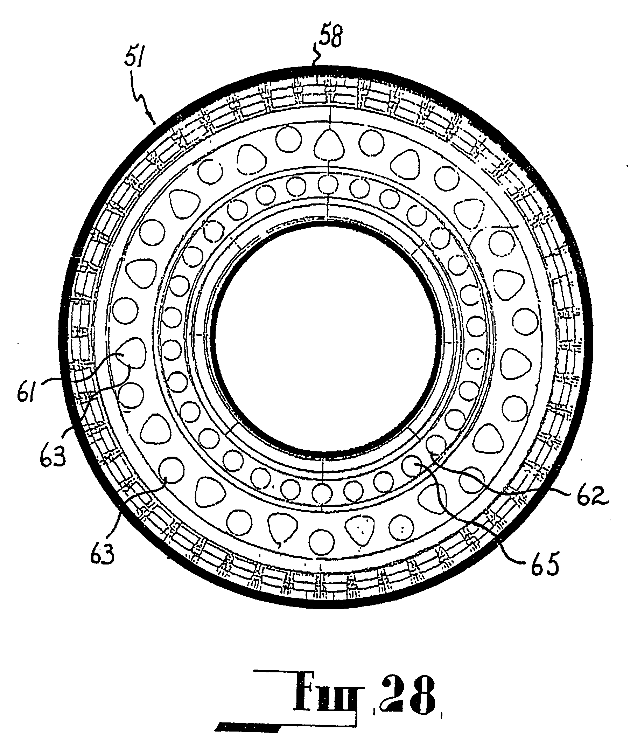

There are other environments in which it is desirable to have a tyre which operates at higher speed and lower load conditions. One such arrangement would be non-pneumatic tyres fitted to automobiles. The embodiment shown in Figs. 24 and 25 is directed to a non-pneumatic tyre 80 which can operate at higher speeds than the tyres according to the previous embodiments. The tyre according to this embodiment is somewhat similar to the tyres of the previous embodiments in that cavities in the resiliently deformable annular body 82 are arranged in two sets, being cavities 83 in a first set 81 and cavities 85 in a second set 82. The cavities 83, 85 in this embodiment are, however, of a cross-section which is generally rectangular configuration with rounded corners.

In the various embodiments, the apertures have been described as being arranged in two sets; namely, a first set which is outermost and a second set which is innermost. There may, however, be situations in which it is advantageous to provide cavities in more than two sets. In such a case, the cavities may increase in cross-sectional area in the radially outward direction.

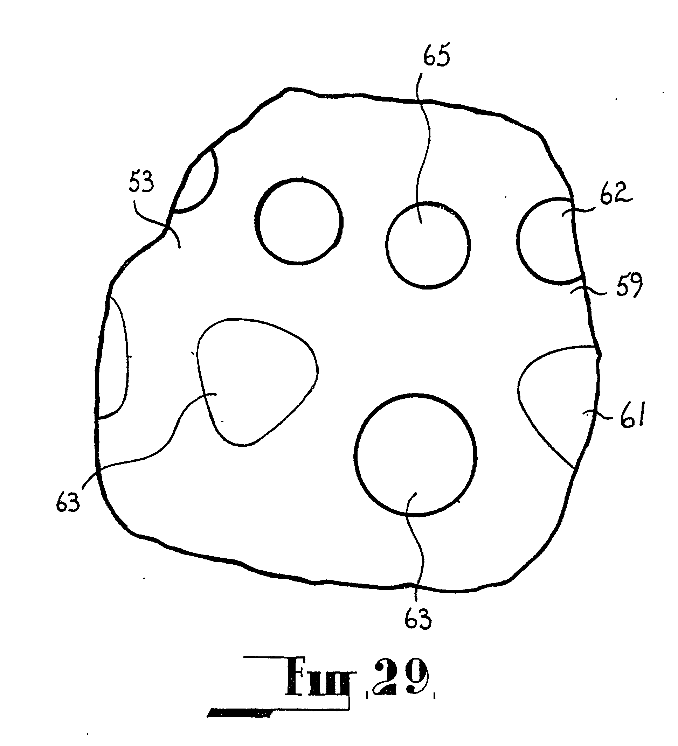

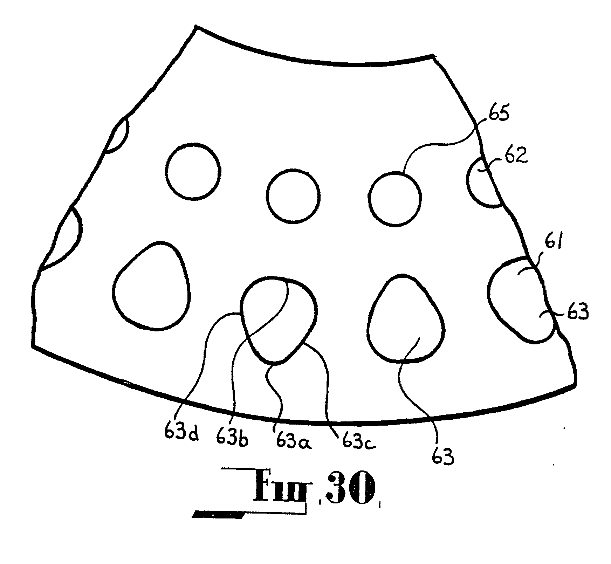

In the embodiment which is shown in Figs. 23, the cavities 63, 65 are of triangular configuration, somewhat resembling an equilateral triangle with rounded corners. The embodiment shown in Figs. 26 and 27 is somewhat similar to the embodiment of Fig. 23 with the exception that the cavities 63 in the first set 61 are of a configuration comprising two spaced apart arcs 63a, 63b with the concave sides thereof in facing relationship, and curved lines 63c, 63d extending between the arcs to complete the closed curve. The closed curve somewhat resembles an isosceles triangle with rounded corners. The major axis of each isosceles triangle is aligned with a radial axis of the tyre. Additionally, the radius of curvature of rounding of each of the corners of the triangular shape in this embodiment is larger than that in the third embodiment, as can be seen from the drawings. The more generous rounding at the corners of this embodiment assists in further reducing the tendency of the corners of fold about themselves under high load conditions. Any such folding may create zones of tight radii at the corners which could lead to excessive heat generation resulting in degradation of the rubber and premature failure of the tyre.

In this embodiment, alternate cavities 63 of the first set 61 are radially offset with respect to each other to a slight extent.

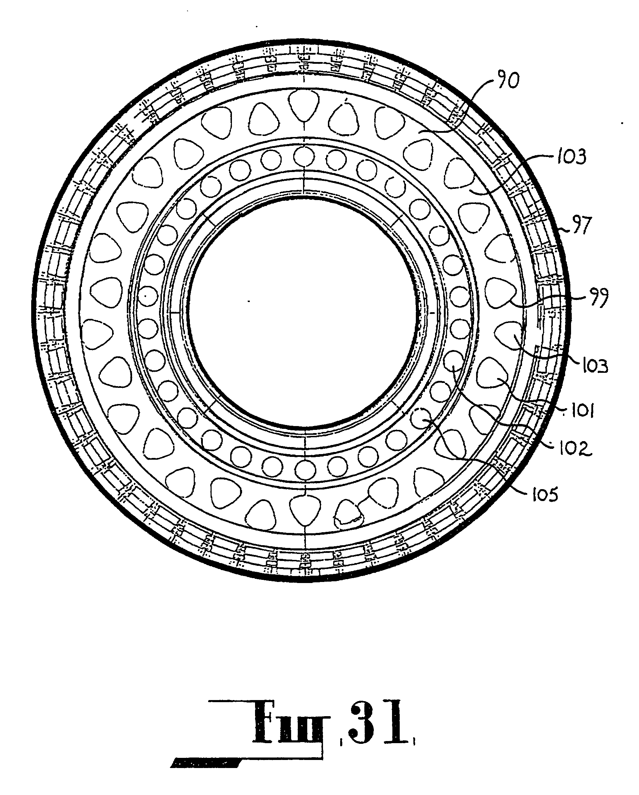

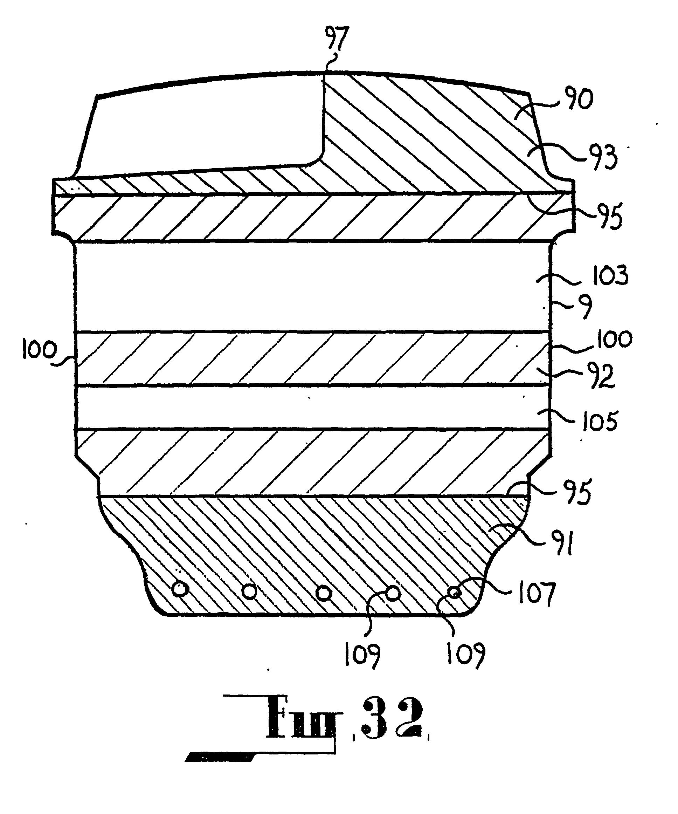

The embodiment shown in Figs. 28 and 29 of the accompanying drawings is also somewhat similar to the embodiment shown in Fig. 23. In this embodiment, at least some of the cavities 63 in the first set 61 are of generally circular cross-section configuration. More particularly, the cavities 63 are so arranged that alternate apertures are of a generally circular configuration. The remaining apertures are of generally triangular configuration with rounded corners and the apex of each such cavity positioned outermost.

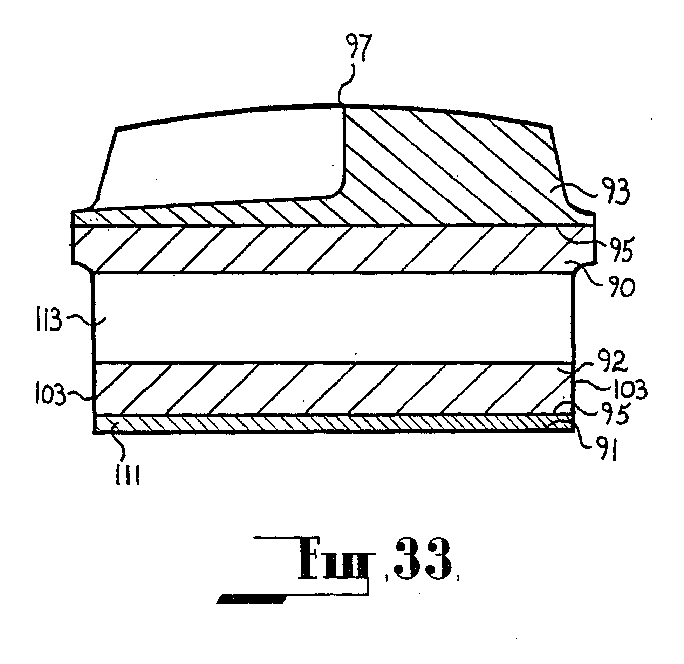

The embodiment shown in Fig. 30 is somewhat similar to the previous embodiment except that the cavities 63 in the first set 61 are no longer staggered in relation to each other; that is, the spacing between the tread and each cavities 63 is substantially equal.

It is believed that the tyres according to the two immediately preceding embodiments may have improved rolling characteristics (so as to provide a smoother ride) in comparison to tyres according to the earlier embodiments.

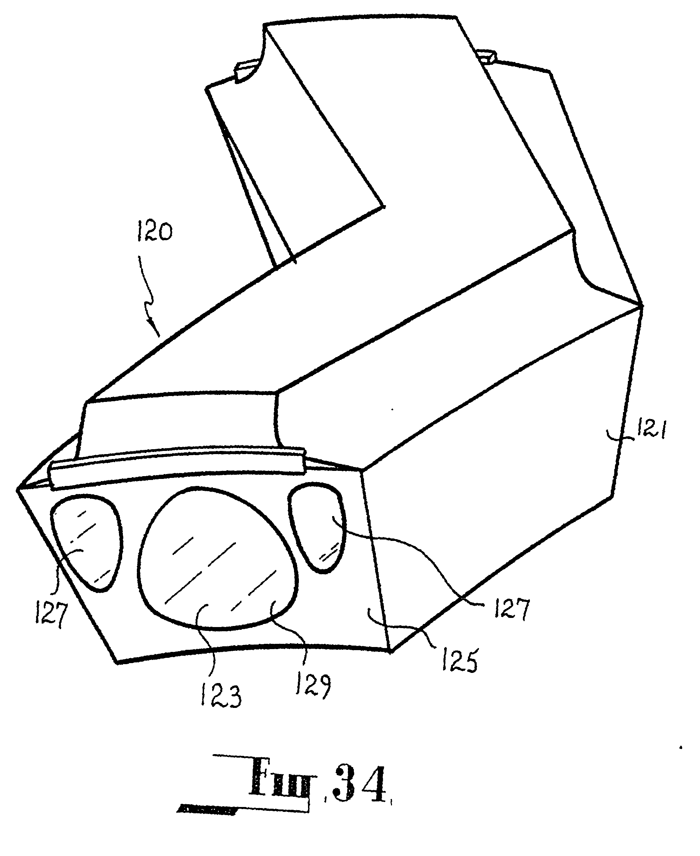

In the previous embodiments, the resiliently deformable body of the tyre has been of unitary construction. It may be advantageous in some circumstances to make the body of a laminate construction to enhance the performance characteristics of the tyre. The embodiment shown in Figs. 31, 32, and 33 provides such a tyre.

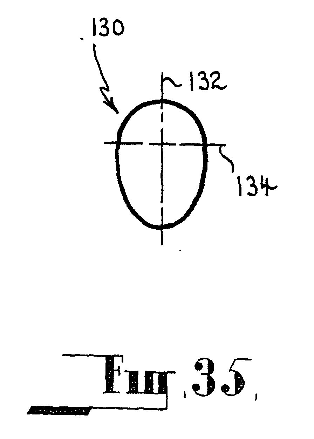

Referring to Figs. 31 and 32, the tyre comprises an annular body 90 of laminate construction comprising three layers of rubber including an inner layer 91, an intermediate layer 92 and an outer layer 93. The three layers are distinct and are bonded to each other at respective interfaces 95. The characteristics of the layers are selected according to the respective functions that the layers are to perform, as will be explained later.

The inner layer 91 provides an inner portion of the tyre for engagement with a support such as a wheel rim (not shown). The outer layer 93 provides an outer portion of the tyre for engagement with the ground and includes a tread structure 97.

The intermediate layer 92 is provided for load supporting and cushioning purposes.

While the rubber employed for the intermediate layer 92 is resilient for the purposes of cushioning, the cushioning characteristics are enhanced by the presence of cavities 99 formed therein. The cavities 99 are of rounded cross-sectional shape and extend across the tyre to open onto opposed side faces 100 of the annular body 91.

The cavities 99 are arranged in two sets, being a first set 101 comprising a plurality of circumferentially spaced cavities 103, and a second set 102 comprising a plurality of circumferentially spaced cavities 105.

The cavities 103 in the first set 101 are of larger cross-sectional area than the cavities 105 in the second set 102. The difference in the cross-sectional areas of the cavities 103 and 105 reduces the amount of elastomeric material used in the outer circumferential region of the intermediate layer 92 of the tyre. This assists in providing the outer region of the intermediate layer 92 with greater resilience than the inner region thereof and also reduces the amount of elastomeric material within the tyre so reducing the amount of heat likely to be generated during operation of the tyre. The greater resilience of the outer circumferential region of the intermediate layer 92 provides for a relatively soft ride in load conditions. As loading increases, the impact of the reduced resilience of the inner circumferential region arising from the smaller cavities 105 progressively increases so providing a progressively harder ride.

The cavities 105 in the second set 102 are of generally circular cross-sectional configuration, and the cavities 103 in the first set 101 are of generally triangular configuration with rounded corners. The cavities 103 in the first set 101 are oriented in alternate arrangements, as shown in Fig. 31.

The inner portion provided by the inner layer 91 requires greater stiffness than the other layers to facilitate gripping of the tyre onto the wheel rim. Such stiffness may be enhanced by the presence of reinforcement means 107 such as reinforcement rings 109.

The outer layer 93 which provides the tread structure 97 must be durable so as to provide good wear resistant characteristics.

In this embodiment, the hardness of the various layers 91, 92 and 93 decreases in the radially outward direction of the tyre. The inner layer 91 is of hard rubber, being rubber having a hardness in the range of about 85 to 90 Shore A. The intermediate layer 92 is somewhat softer for cushioning and load support, and has a hardness of about 70 to 75 Shore A. The outer layer 93, which provides the tread structure 17, is formed of rubber selected for wear resistance so as to provide good service life and has a hardness of 63 to 65 Shore A.

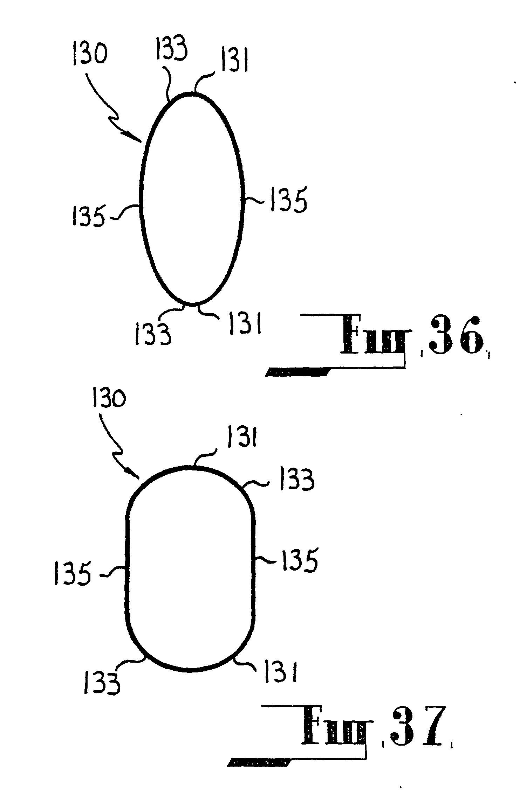

The next embodiment, which is shown in Fig. 33 of the drawings, is somewhat similar to the immediately preceding embodiment inasmuch as it comprises a body of laminate construction including an inner layer 91, an intermediate layer 92, and an outer layer 93. However, in this embodiment, the inner layer 91, which provides the inner portion of the tyre for mounting onto a wheel rim, comprises a rigid band 111 in the form of a steel ring. The steel ring is arranged to be fitted onto the wheel rim by way of an interference fit.

The intermediate layer 92 is bonded onto the steel ring 111 and includes a plurality of cavities 113 in circumferentially spaced relationship and of a cross-section which is generally triangular with rounded corners.

The embodiment shown in Figs. 8 and 9 is directed to a composite tyre assembled from a plurality of tyre segments. It should be understood that any of the other embodiments directed to a one-piece tyre could also be of composite construction. In this regard, the embodiment shown in Fig. 34 of the drawings illustrates a tyre segment 120 which along with similar such segments can be assembled on a wheel rim to form a composite tyre. The assembled composite tyre would have a first set of cavities in circumferentially spaced relationship and a second set of cavities in circumferentially spaced relationship, the first and second sets being radially offset with respect to each other, as is illustrated in some of the earlier embodiments.

The tyre segment 120 comprises a body 121 of resilient deformable material and a plurality of cavities provided therein. The cavities extend through the body and open onto the opposed ends 125 thereof. The cavities comprise a pair of first cavities 127 and a second cavity 129. The cavities 127, 129 are of rounded shape in cross-section as shown in the drawing. The pair of first cavities 127 form, along with corresponding cavities in similar such tyre segments, the first set of cavities in the composite tyre. Similarly, the second cavity 129, along with corresponding cavities in similar such tyre segments, form the second set of cavities in the composite tyre.

From the various embodiments which have been described and illustrated, it is evident that the cavities formed in the resiliently deformable body, whether of one-piece construction or segmented construction, can be of various cross-sectional shapes, including the shapes illustrated schematically in Figs. 35 and 38 of the accompanying drawings. Each of the illustrated shapes 130 is elongate so as to have a major axis 132 and a further axis 134 transverse to the major axis 132 at a location corresponding to the maximum width. In the shape illustrated in Fig. 39, there are two such further axes. The shapes each have two end portions 131 in opposed relationship along the major axis. Typically, the cavities would be so arranged that each has the major axis of its cross-sectional shape normal to the direction of cyclical movement of the ground-engaging structure.

Each shape 130 is a closed curve comprising a pair of arcs 133 in opposing relationship and two intermediate lines 135 extending between the arcs 133 to complete the closed curve. From the various figures, it can be seen that the intermediate lines 135 can be straight or curved.

The various shapes 130 have a ratio of the dimension along the major axis 132 to the dimension along the minor axis up to 2:1. In the shape illustrated in Fig. 35, the ratio is preferably within the range 1.4:1 to 1.6:1.

The various embodiments which have been described have been directed to ground-engaging structures in the form of tyres for wheels. A ground-engaging structure can also be applied to an endless track for a tracked vehicle. One such ground-engaging structure will now be described in relation to Fig. 40 of the accompanying drawings.

The ground-engaging structure 140 illustrated in Fig. 40 of the drawings comprises endless band 141 passing around track end rollers 143. The endless band 141 is supported between the end rollers 143 by an upper support roller 145 and a plurality of spaced apart lower support rollers 147.

The endless band 141 is of one-piece construction and comprises a body 149 formed of resiliently deformable material such as rubber. The body may incorporate reinforcement means (not shown). The body 149 is configured to define a plurality of spaced apart ground-engaging pads 151 each of which includes a rounded cavity 153 extending therethrough. As with the embodiment described in relation to a tyre, the shape of the cavity 153 is such that it avoids, or at least inhibits, formation of zones of high stress concentration in the resiliently deformable pads 151 when they deform under normal working loads.

While the ground-engaging structure according to the embodiment shown in Fig. 40 is of one-piece construction, it is also possible for it to be of segmented construction. One such construction is illustrated in the embodiment shown in Figs. 41 and 42 of the accompanying drawings. In this embodiment, the ground-engaging structure 160 is supported on a flexible endless band 161 having an outer face 162. The band 161 is adapted to be mounted for cyclical movement about track end rollers (not shown). The ground-engaging structure 160 comprises a plurality of track segments 163 having an inner face 164 supported on the outer face 162 of the endless band 161. Each track segment 163 comprises a resiliently deformable body 165 having one or more cavities provided therein. In this embodiment, each resiliently deformable body 165 has three cavities, being a pair of first cavities 167 and a second cavity 169. The pair of first cavities 167 co-operate with similar such cavities in other track segments to provide the ground-engaging structure with a first set 171 of cavities. Similarly, the second cavity 169 co-operates with corresponding cavities of other track segments to provide the ground-engaging structure with a second set of cavities 172 spaced inwardly of the first set.

The various track segments are individually and preferably releasably secured to the endless band 161 by any suitable means such as by bonding or a detachable fixing system.

From the foregoing, it is evident that the tyres according to the various embodiments whether they are of one-piece or composite construction, provide a simple yet highly effective arrangement for avoiding, or at least reducing, undesirably high stress concentrations in the tyres when deforming under normal working loads. This is achieved by selection of the cross-section shape of the cavities within the resiliently deformable body of the tyre so that upon deformation under normal working loads the cavities deform to closed curves without creation of zones of tight radii which would cause undesirable stress raisers or having wall sections coming into contact one with another.

## Claims

1. A non-pneumatic tyre (10) comprising an annular body (12) having first and second portions, said first portion (91) being a radially inner peripheral portion for positioning on a wheel rim and the second portion (92, 93) being disposed radially outwardly of said first portion (91), said second portion (92, 93) being of resiliently deformable unitary construction to provide cushioning and comprising a body of resiliently flexible material having opposed side walls (100) and a plurality of longitudinal cavities (99) each bounded by a cavity wall and extending into at least part of said second portion (92, 93) from one of the side walls, and each cavity having in an unloaded condition a cross-sectional shape comprising a pair of spaced apart arcs (133) with the concave sides thereof in facing relationship and intermediate lines (135) extending between the arcs (133), **characterised in that** said arcs (133) have unequal radii of curvature and **in that** each said cavity (99) being arranged to assume upon resilient deformation of the body (12) under normal static load conditions a cross-sectional configuration inhibiting formation of zones of high stress concentration at the cavity wall.

2. A tyre according to claim 1 further **characterised in that** said lines extending between the arcs are curved.

3. A tyre according to claim 1 or 2 further **characterised in that** each cavity (99) is elongate in cross-section in the undeformed condition of the body (12).

4. A tyre according to claim 3 further **characterised in that** the cross-section of the cavity (99) is an ovoid.

5. A tyre according to any one of the preceding claims wherein the arc having the greater radius of curvature is radially outermost.

6. A tyre according to any one of claims 1 to 4 wherein the arc having the greater radius of curvature is radially innermost.

7. A tyre according to any one of claims 3 to 6 further **characterised in that** the elongate cavity (99) is so disposed that the major axis of the cross-sectional shape of the cavity is substantially normal to the direction of cyclical movement of the tyre.

8. A tyre according to any one of the preceding claims wherein the cavities (99) are located entirely in said second portion (92, 93).

9. A tyre according to any one of the preceding claims further **characterised in that** said cavities (99) are in a circumferentially spaced apart relationship, the spacing between the cavities (99) providing load-supporting webs between the cavities.

10. A tyre according to any one of the preceding claims further **characterised in that** respective ones of said cavities (99) extend into said second portion (92, 93) from each of said opposed side walls (100).

11. A tyre according to claim 10 further **characterised in that** the cavities (99) extending into said second portion (92, 93) from each of said opposed side walls (100) comprise a first set of cavities (101) within said second portion (92, 93), the cavities (101) in said first set being in circumferentially spaced apart relationship.

12. A tyre according to claim 11 further **characterised in that** the cavities (99) further comprise a second set of cavities (102) within said second portion (92, 93), the cavities (102) in said second set being in circumferentially spaced apart relationship.

13. A tyre according to claim 12 further **characterised in that** the cavities (101, 102) in said first and second sets are in a staggered relationship with respect to each other.

14. tyre according to claim 12 further **characterised in that** each cavity (102) in said second set is aligned with a respective cavity (101) in said first set along a line normal to the direction of cyclical movement of the tyre.

15. A tyre according to claim 12 further **characterised in that** the cavities (102) in said second set are disposed inwardly of the cavities (101) in said first set.

16. A tyre according to claim 10 wherein the cavities (99) extending into said second portion (92, 93) from one side wall (100) are in a circumferentially staggered relationship with respect to the cavities (99) extending into the second portion (92, 93) from the other side wall (100).

17. A tyre according to any one of the preceding claims further **characterised in that** each cavity (99) comprises a core hole.

18. A tyre according to any one of the preceding claims further **characterised in** the said first portion (91) is of unitary construction.

19. A tyre according to any one of the preceding claims further **characterised in that** said first portion (91) is formed of elastomeric material of a hardness suitable for gripping engagement with the wheel rim.

20. A tyre according to claim 19 further **characterised in that** said first portion (91) comprises elastomeric material having a hardness of about 85 to 90 Shore A.

21. A tyre according to any one of claims 1 to 17 said first portion (91) comprises a substantially rigid band onto which said second portion (92, 93) is bonded.

22. A tyre according to claim 21 further **characterised in that** said first portion (91) is of a split construction for expansion or contraction to facilitate installation on the wheel rim.

23. A tyre according to any one of the preceding claims further **characterised in that** said second portion (92, 93) is of layered construction comprising an outer layer (93) presenting a tread (97) for engagement with the ground and an intermediate layer (92) disposed between said outer layer (93) and said first portion (91).

24. A tyre according to claim 23 further **characterised in that** said outer layer (93) is of elastomeric material having a hardness of about 63 to 65 Shore A.

25. A tyre according to claim 23 or 24 wherein said intermediate layer (92) is of elastomeric material suitable to provide load support and cushioning.

26. A tyre according to claim 25 further **characterised in that** said intermediate layer (92) comprises rubber having low hysteresis characteristics.

27. A tyre according to claim 26 further **characterised in that** said intermediate layer (92) comprises rubber having a hardness of about 70 to 75 Shore A.

28. A tyre according to any one of claims 23 to 27 further **characterised In that** said cavities (99) are disposed in said intermediate layer.

29. A tyre according to any one of the preceding claims further **characterised in that** reinforcement means (107) are provided in the inner portion (91).

30. A tyre according to any one of the preceding claims further **characterised in that** the cross-sectional configuration assumed by each cavity (99) upon the resilient deformation of the body (12) comprises a closed curve.

31. A tyre according to any one of the preceding claims further **characterised in that** each cavity (99) is arranged to assume said cross-sectional configuration upon resilient deformation of the body (12) through formation of the cavity (99) in a suitable cross-sectional shape in the undeformed condition of the body (12).

32. A tyre according to any one of the preceding claims further **characterised in that** each cavity (99) opens onto the exterior of the body (12) and extends into the body (12).

33. A tyre according to claim 32 further **characterised in that** each cavity (99) extends cross-wlse through the body (12) with both ends of the cavity opening onto the exterior of the body.

34. A tyre according to claim 32 further **characterised in that** each cavity (99) is open at one end and closed at the other end.

35. A tyre according to claim 34 further **characterised in that** each cavity (99) on one side is aligned axially with a respective cavity (99) on the other side.

36. A tyre according to claim 34 wherein the cavities (99) on one side are circumferentially staggered in relation to the cavities (99) on the other side.

37. A tyre according to any one of the preceding claims adapted to be fitted onto a wheel rim having a rim portion with a peripheral recess for receiving and supporting the tyre, **characterised in that** most of the first portion (91) of the tyre is received in the peripheral recess when the tyre is fitted onto the wheel rim.

38. A tyre according to any one of claims 1 to 36 **characterised in that** the first portion (91) is configured for engagement with a press-on wheel rim.

## Patentansprüche

1. Ein nicht pneumatischer Reifen (10), bestehend aus einem ringförmigen Körper (12) mit einem ersten und zweiten Abschnitt, wobei der erste Abschnitt (91) ein radial innerer Umfangsabschnitt zur Positionierung auf einer Felge ist und der zweite Abschnitt (92, 93) von diesem ersten Abschnitt (91) her radial nach außen angeordnet ist, wobei der zweite Abschnitt (92, 93) eine elastisch verformbare, eine Einheit bildende Struktur zur Bereitstellung von Dämpfung ist und einen Körper aus einem elastisch flexiblen Material umfaßt, der einander gegenüberliegende Seitenwände (100) und eine Vielzahl von Längsvertiefungen (99) aufweist, wobei jede jeweils durch eine Vertiefungswand abgegrenzt ist und sich von einer Seitenwand her in mindestens einen Teil des zweiten Abschnitts (92, 93) erstreckt und wobei jede Vertiefung in einem unbelasteten Zustand eine Querschnittsform aufweist, bestehend aus einem Paar voneinander getrennt angeordneter Bögen (133), deren konkave Seiten einander gegenüberliegen und wobei die Zwischenlinien (135) sich zwischen den Bögen (133) erstrecken, **dadurch gekennzeichnet, daß** diese Bögen (133) ungleiche Krümmungsradien aufweisen und daß jede der Vertiefungen (99) jeweils so angeordnet ist, daß sie bei elastischer Verformung des Körpers (12) unter normalen statischen Lastbedingungen eine Querschnittskonfiguration einnimmt, die die Formation von Zonen hoher Belastungskonzentration an der Vertiefungswand hemmt.

2. Reifen gemäß Anspruch 1, weiter **dadurch gekennzeichnet, daß** die sich zwischen den Bögen erstreckenden Linien gebogen sind.

3. Reifen gemäß Anspruch 1 oder 2, weiter **dadurch gekennzeichnet, daß** jede Vertiefung (99) im nicht verformten Zustand des Körpers (12) jeweils länglich im Querschnitt ist.

4. Reifen gemäß Anspruch 3, weiter **dadurch gekennzeichnet, daß** der Querschnitt der Vertiefung (99) eiförmig ist.

5. Reifen gemäß einem der vorhergehenden Ansprüche, wobei der Bogen mit dem größeren Krümmungsradius radial am weitesten außen liegt.

6. Reifen gemäß einem der Ansprüche 1 bis 4, wobei der Bogen mit dem größeren Krümmungsradius radial am weitesten innen liegt.

7. Reifen gemäß einem der Ansprüche 3 bis 6, weiter **dadurch gekennzeichnet, daß** die längliche Vertiefung (99) so angeordnet ist, daß die Hauptachse der Querschnittsform der Vertiefung zu der Richtung der kreisförmigen Bewegung des Reifens im wesentlichen normal liegt.

8. Reifen gemäß einem der vorhergehenden Ansprüche, wobei die Vertiefungen (99) vollständig in dem zweiten Abschnitt (92, 93) angeordnet sind.

9. Reifen gemäß einem der vorhergehenden Ansprüche, weiter **dadurch gekennzeichnet, daß** die Vertiefungen (99) sich in einem im Umfang getrennt voneinander angeordneten Verhältnis befinden, wobei der zwischen den Vertiefungen (99) befindliche Zwischenraum lasttragende Rippen zwischen den Vertiefungen bereitstellt.

10. Reifen gemäß einem der vorhergehenden Ansprüche, weiter **dadurch gekennzeichnet, daß** sich die Vertiefungen (99) jeweils in den zweiten Abschnitt (92, 93) von jeder der einander gegenüberliegenden Seitenwände (100) erstrecken.

11. Reifen gemäß Anspruch 10, weiter **dadurch gekennzeichnet, daß** die Vertiefungen (99), die sich von jeder der einander gegenüberliegenden Seitenwände (100) in den zweiten Abschnitt (92, 93) erstrecken, innerhalb des zweiten Abschnitts (92, 93) einen ersten Satz Vertiefungen (101) umfassen, wobei die Vertiefungen (101) in dem ersten Satz sich in einem im Umfang voneinander getrennt angeordneten Verhältnis befinden.

12. Reifen gemäß Anspruch 11, weiter **dadurch gekennzeichnet, daß** die Vertiefungen (99) innerhalb des zweiten Abschnitts (92, 93) weiter einen zweiten Satz Vertiefungen (102) umfassen, wobei die Vertiefungen (102) in dem zweiten Satz sich in einem im Umfang voneinander getrennt angeordneten Verhältnis befinden.

13. Reifen gemäß Anspruch 12, weiter **dadurch gekennzeichnet, daß** die Vertiefungen (101, 102) in den ersten und zweiten Sätzen sich in einem versetzten Verhältnis zueinander befinden.

14. Reifen gemäß Anspruch 12, weiter **dadurch gekennzeichnet, daß** jede Vertiefung (102) in dem zweiten Satz zu einer entsprechenden Vertiefung (101) in dem ersten Satz entlang einer normal zu der Richtung einer zyklischen Bewegung des Reifens verlaufenden Linie ausgerichtet ist.

15. Reifen gemäß Anspruch 12, weiter **dadurch gekennzeichnet, daß** die Vertiefungen (102) in dem zweiten Satz in den Vertiefungen (101) in dem ersten Satz nach innen angeordnet sind.

16. Reifen gemäß Anspruch 10, wobei sich die Vertiefungen (99), die sich von einer Seitenwand (100) in den zweiten Abschnitt (92, 93) erstrecken, hinsichtlich der Vertiefungen (99), die sich von der anderen Seitenwand (100) in den zweiten Abschnitt (92, 93) erstrecken, in einem im Umfang versetzten Verhältnis befinden.

17. Reifen gemäß einem der vorhergehenden Ansprüche, weiter **dadurch gekennzeichnet, daß** jede Vertiefung (99) eine Kernöffnung umfaßt.

18. Reifen gemäß einem der vorhergehenden Ansprüche, weiter **dadurch gekennzeichnet, daß** die Struktur des ersten Abschnitts (91) eine Einheit bildet.

19. Reifen gemäß einem der vorhergehenden Ansprüche, weiter **dadurch gekennzeichnet, daß** der erste Abschnitt (91) aus einem elastischen Polymer geformt ist, das eine Härte aufweist, die für den Eingriff in die Felge geeignet ist.

20. Reifen gemäß Anspruch 19, weiter **dadurch gekennzeichnet, daß** der erste Abschnitt (91) ein elastisches Polymer mit einer Shore-A-Härte von ungefähr 85 bis 90 umfaßt.

21. Reifen gemäß einem der Ansprüche 1 bis 17, wobei der erste Abschnitt (91) ein im wesentlichen steifes Band umfaßt, an dem der zweite Abschnitt (92, 93) befestigt ist.

22. Reifen gemäß Anspruch 21, weiter **dadurch gekennzeichnet, daß** der erste Abschnitt (91) eine gespaltene Struktur zum Dehnen oder Zusammenziehen aufweist, um das Anbringen auf der Felge zu erleichtern.

23. Reifen gemäß einem der vorhergehenden Ansprüche, weiter **dadurch gekennzeichnet, daß** der zweite Abschnitt (92, 93) eine Schicht-Struktur aufweist, die eine äußere Schicht (93), die ein Profil (97) zum Eingriff mit dem Boden darstellt und eine mittlere Schicht (92), die zwischen der äußeren Schicht (93) und dem ersten Abschnitt (91) angeordnet ist, umfaßt.

24. Reifen gemäß Anspruch 23, weiter **dadurch gekennzeichnet, daß** die äußere Schicht (93) aus einem elastischen Polymer mit einer Shore-A-Härte von ungefähr 63 bis 65 besteht.

25. Reifen gemäß einem der Ansprüche 23 oder 24, wobei die mittlere Schicht (92) aus einem elastischen Polymer, das zur Bereitstellung von Laststütze und Dämpfung geeignet ist, besteht.

26. Reifen gemäß Anspruch 25, weiter **dadurch gekennzeichnet, daß** die mittlere Schicht (92) einen Gummi mit niedrigen Hysteresischarakteristiken umfaßt.

27. Reifen gemäß Anspruch 26, weiter **dadurch gekennzeichnet, daß** die mittlere Schicht (92) einen Gummi mit einer Shore-A-Härte von ungefähr 70 bis 75 umfaßt.

28. Reifen gemäß einem der Ansprüche 23 bis 27, weiter **dadurch gekennzeichnet, daß** die Vertiefungen (99) in der mittleren Schicht angeordnet sind.

29. Reifen gemäß einem der vorhergehenden Ansprüche, weiter **dadurch gekennzeichnet, daß** in dem inneren Abschnitt (91) ein Verstärkungsmittel (107) bereitgestellt ist.

30. Reifen gemäß einem der vorhergehenden Ansprüche, weiter **dadurch gekennzeichnet, daß** die von jeder Vertiefung (99) bei elastischer Deformation des Körpers (12) eingenommene Querschnittskonfiguration eine geschlossene Kurve umfaßt.

31. Reifen gemäß einem der vorhergehenden Ansprüche, weiter **dadurch gekennzeichnet, daß** jede Vertiefung (99) so angeordnet ist, daß sie bei elastischer Deformation des Körpers (12) diese Querschnittskonfiguration durch die Formation der Vertiefung (99) in einer geeigneten Querschnittsform im nicht verformten Zustand des Körpers (12) einnimmt.

32. Reifen gemäß einem der vorhergehenden Ansprüche, weiter **dadurch gekennzeichnet, daß** sich jede Vertiefungen (99) jeweils zum Äußeren des Körpers (12) hin öffnet und sich in den Körper (12) erstreckt.

33. Reifen gemäß Anspruch 32, weiter **dadurch gekennzeichnet, daß** sich jede Vertiefungen (99) jeweils kreuzweise durch den Körper (12) erstreckt, wobei beide Enden der Vertiefung sich zum Äußeren des Körpers hin öffnen.

34. Reifen gemäß Anspruch 32, weiter **dadurch gekennzeichnet, daß** jede Vertiefung (99) jeweils an einem Ende offen und an dem anderen Ende geschlossen ist.

35. Reifen gemäß Anspruch 34, weiter **dadurch gekennzeichnet, daß** jede Vertiefung (99) auf einer Seite axial mit einer entsprechenden Vertiefung (99) auf der anderen Seite ausgerichtet ist.

36. Reifen gemäß Anspruch 34, wobei die Vertiefungen (99) auf der einen Seite hinsichtlich der Vertiefungen (99) auf der anderen Seite im Umfang versetzt sind.

37. Reifen gemäß einem der vorhergehenden Ansprüche, der so ausgeführt ist, daß er auf einer Felge befestigt werden kann, die einen Felgenabschnitt mit einer Umfangsaussparung zum Aufnehmen und Tragen des Reifens aufweist, **dadurch gekennzeichnet, daß** der größte Teil des ersten Abschnitts (91) des Reifens in der Umfangsaussparung aufgenommen wird, wenn der Reifen auf die Felge gepaßt wird.

38. Reifen gemäß einem der Ansprüche 1 bis 36, **dadurch gekennzeichnet, daß** der erste Abschnitt (91) so konfiguriert ist, daß er in eine aufdrückbare Felge eingreifen kann.

## Revendications

1. Un pneu non pneumatique (10) comprenant un corps annulaire (12) ayant des première et deuxième portions, ladite première portion (91) étant une portion périphérique radialement interne destinée à être positionnée sur une jante de roue et la deuxième portion (92, 93) étant disposée radialement vers le dehors par rapport à ladite première portion (91), ladite deuxième portion (92, 93) étant de construction unitaire élastiquement déformable afin de fournir un amortissement et comprenant un corps en matériau élastiquement flexible ayant des parois latérales opposées (100) et une pluralité de cavités longitudinales (99), chacune étant délimitée par une paroi de cavité et s'étendant dans au moins une partie de ladite deuxième portion (92, 93) depuis l'une des parois latérales, et chaque cavité ayant, dans un état non chargé, une conformation en coupe transversale comprenant une paire d'arcs espacés l'un de l'autre (133) dont les côtés concaves sont en relation de face-à-face et des lignes intermédiaires (135) qui s'étendent entre les arcs (133), **caractérisé en ce que** lesdits arcs (133) ont des rayons d'arrondi inégaux et **en ce que** chacune desdites cavités (99) est agencée pour adopter, lors de la déformation élastique du corps (12) dans des conditions de charge statique normales, une configuration en coupe transversale qui inhibe la formation de zones à haute concentration de contraintes au niveau de la paroi de la cavité.

2. Un pneu selon la revendication 1 caractérisé de plus en ce que lesdites lignes qui s'étendent entre les arcs sont courbes.

3. Un pneu selon la revendication 1 ou la revendication 2 caractérisé de plus en ce que chaque cavité (99) est de coupe transversale allongée lorsque le corps (12) est en état non déformé.

4. Un pneu selon la revendication 3 caractérisé de plus en ce que la coupe transversale de la cavité (99) est ovoïde.

5. Un pneu selon une quelconque des revendications précédentes dans lequel l'arc ayant le plus grand rayon d'arrondi est radialement le plus externe.

6. Un pneu selon une quelconque des revendications 1 à 4 dans lequel l'arc ayant le plus grand rayon d'arrondi est radialement le plus interne.

7. Un pneu selon une quelconque des revendications 3 à 6 caractérisé de plus en ce que la cavité allongée (99) est disposée de telle sorte que le grand axe de la conformation en coupe transversale de la cavité est sensiblement perpendiculaire au sens de déplacement cyclique du pneu.

8. Un pneu selon une quelconque des revendications précédentes dans lequel les cavités (99) sont entièrement situées dans ladite deuxième portion (92, 93).

9. Un pneu selon une quelconque des revendications précédentes caractérisé de plus en ce que lesdites cavités (99) sont en relation d'espacement circonférentiel les unes par rapport aux autres, l'espacement entre les cavités (99) fournissant des bandes de support de charge entre les cavités.

10. Un pneu selon une quelconque des revendications précédentes caractérisé de plus en ce que des cavités respectives desdites cavités (99) s'étendent dans ladite deuxième portion (92, 93) depuis chacune desdites parois latérales opposées (100).

11. Un pneu selon la revendication 10 caractérisé de plus en ce que les cavités (99) qui s'étendent dans ladite deuxième portion (92, 93) depuis chacune desdites parois latérales opposées (100) comprennent un premier ensemble de cavités (101) au sein de ladite deuxième portion (92, 93), les cavités (101) dans ledit premier ensemble étant en relation d'espacement circonférentiel les unes par rapport aux autres.

12. Un pneu selon la revendication 11 caractérisé de plus en ce que les cavités (99) comprennent de plus un deuxième ensemble de cavités (102) au sein de ladite deuxième portion (92, 93), les cavités (102) dans ledit deuxième ensemble étant en relation d'espacement circonférentiel les unes par rapport aux autres.

13. Un pneu selon la revendication 12 caractérisé de plus en ce que les cavités (101, 102) dans lesdits premier et deuxième ensembles sont en relation d'échelonnement les unes relativement aux autres.

14. Un pneu selon la revendication 12 caractérisé de plus en ce que chaque cavité (102) dans ledit deuxième ensemble est alignée avec une cavité respective (101) dans ledit premier ensemble sur une ligne perpendiculaire au sens de déplacement cyclique du pneu.

15. Un pneu selon la revendication 12 caractérisé de plus en ce que les cavités (102) dans ledit deuxième ensemble sont disposées vers le dedans par rapport aux cavités (101) dans ledit premier ensemble.

16. Un pneu selon la revendication 10 dans lequel les cavités (99) qui s'étendent dans ladite deuxième portion (92, 93) depuis une paroi latérale (100) sont en relation d'échelonnement circonférentiel relativement aux cavités (99) qui s'étendent dans la deuxième portion (92, 93) depuis l'autre paroi latérale (100).

17. Un pneu selon une quelconque des revendications précédentes caractérisé de plus en ce que chaque cavité (99) comprend un trou central.

18. Un pneu selon une quelconque des revendications précédentes caractérisé de plus en ce que ladite première portion (91) est de construction unitaire.

19. Un pneu selon une quelconque des revendications précédentes caractérisé de plus en ce que ladite première portion (91) est formée en élastomère de dureté adéquate pour qu'elle puisse se mettre en prise par agrippement avec la jante de roue.

20. Un pneu selon la revendication 19 caractérisé de plus en ce que ladite première portion (91) comprend de l'élastomère ayant une dureté Shore A de 85 à 90 environ.

21. Un pneu selon une quelconque des revendications 1 à 17 caractérisé de plus en ce que ladite première portion (91) comprend un ruban sensiblement rigide sur lequel est collée ladite deuxième portion (92, 93).

22. Un pneu selon la revendication 21 caractérisé de plus en ce que ladite première portion (91) est de construction fendue pour se dilater ou se contracter afin de faciliter son installation sur la jante de roue.

23. Un pneu selon une quelconque des revendications précédentes caractérisé de plus en ce que ladite deuxième portion (92, 93) est de construction en couches comprenant une couche externe (93) présentant une bande de roulement (97) destinée à se mettre en prise avec le sol et une couche intermédiaire (92) disposée entre ladite couche externe (93) et ladite première portion (91).

24. Un pneu selon la revendication 23 caractérisé de plus en ce que ladite couche externe (93) est en élastomère ayant une dureté Shore A de 63 à 65 environ.

25. Un pneu selon la revendication 23 ou la revendication 24 dans lequel ladite couche intermédiaire (92) est en élastomère propice à fournir support de charge et amortissement.

26. Un pneu selon la revendication 25 caractérisé de plus en ce que ladite couche intermédiaire (92) comprend du caoutchouc ayant de faibles caractéristiques d'hystérésis.

27. Un pneu selon la revendication 26 caractérisé de plus en ce que ladite couche intermédiaire (92) comprend du caoutchouc ayant une dureté Shore A de 70 à 75 environ.

28. Un pneu selon une quelconque des revendications 23 à 27 caractérisé de plus en ce que lesdites cavités (99) sont disposées dans ladite couche intermédiaire.

29. Un pneu selon une quelconque des revendications précédentes caractérisé de plus en ce que des moyens de renforcement (107) sont prévus dans la portion interne (91).

30. Un pneu selon une quelconque des revendications précédentes caractérisé de plus en ce que la configuration en coupe transversale qu'adopte chaque cavité (99) lors de la déformation élastique du corps (12) comprend une courbe fermée.

31. Un pneu selon une quelconque des revendications précédentes caractérisé de plus en ce que chaque cavité (99) est agencée, grâce à la formation de la cavité (99) dans une conformation en coupe transversale adéquate lorsque le corps (12) est en état non déformé, pour adopter ladite configuration en coupe transversale lors de la déformation élastique du corps (12).

32. Un pneu selon une quelconque des revendications précédentes caractérisé de plus en ce que chaque cavité (99) ouvre sur l'extérieur du corps (12) et s'étend dans le corps (12).

33. Un pneu selon la revendication 32 caractérisé de plus en ce que chaque cavité (99) s'étend transversalement au travers du corps (12), les deux extrémités de la cavité ouvrant sur l'extérieur du corps.

34. Un pneu selon la revendication 32 caractérisé de plus en ce que chaque cavité (99) est ouverte à une extrémité et fermée à l'autre extrémité.

35. Un pneu selon la revendication 34 caractérisé de plus en ce que chaque cavité (99) sur un côté est alignée de façon axiale avec une cavité respective (99) sur l'autre côté.

36. Un pneu selon la revendication 34 dans lequel les cavités (99) sur un côté sont échelonnées circonférentiellement par rapport aux cavités (99) sur l'autre côté.

37. Un pneu selon une quelconque des revendications précédentes conçu pour être monté sur une jante de roue ayant une portion de jante munie d'un renfoncement périphérique destiné à recevoir et à soutenir le pneu, **caractérisé en ce que** la première portion (91) du pneu est en grande partie reçue dans le renfoncement périphérique lorsque le pneu est monté sur la jante de roue.

38. Un pneu selon une quelconque des revendications 1 à 36 **caractérisé en ce que** la première portion (91) est configurée pour se mettre en prise avec une jante de roue à engagement par pression.
